# EUROPEAN PATENT APPLICATION

(11) **EP 4 365 235 A1**
(43) Date of publication of application: **08.05.2024**
(21) Application number: 22832927.2
(22) Date of filing: 21.06.2022
(51) Int. Cl.: C08L 71/00, C08G 65/333, C08G 65/336, C08K 3/18, C08L 71/02, C08L 83/08

(54) **FLUOROPOLYETHER-BASED CURABLE COMPOSITION AND CURED PRODUCT, AND ELECTRIC/ELECTRONIC COMPONENT**

(30) Priority: 01.07.2021 JP 2021109779; 02.07.2021 JP 2021110633
(71) Applicant: SHIN-ETSU CHEMICAL CO., LTD., Tokyo 1000005 (JP)
(72) Inventor: HAYASHI Ryuto, Annaka-shi, Gunma 379-0224 (JP); FUKUDA Kenichi, Annaka-shi, Gunma 379-0224 (JP)
(74) Representative: Mewburn Ellis LLP
(86) International application number: PCT/JP2022/024694
(87) International publication number: WO 2023/276779

(57) **Abstract**

Provided is a fluoropolyether-based curable composition comprising:
(A) a perfluoropolyether compound having at least two alkenyl groups per molecule;
(B) a fluorinated organohydrosilane compound represented by general formula (1) and having at least two hydrosilyl groups 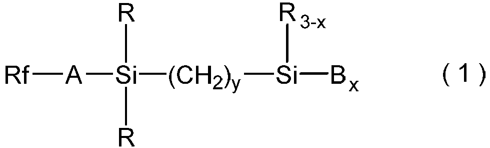 (in the formula, Rf represents a monovalent perfluoropolyether group; A represents a bivalent organic group; R represents a monovalent hydrocarbon group; x represents 1 to 3; B represents a monovalent organic group having a diorganohydrosilyl group and forms a silalkylene structure in conjunction with a silicon atom to which B is linked; and y represents 1 or 2); and
(C) a platinum-group metal-based catalyst.

The fluoropolyether-based curable composition can provide a cured article that has durability against hydrofluoric acid or an electrolyte solution for lithium ion batteries, does not undergo the formation of uncured portions due to the poor compatibility between the constituent components and has satisfactory mold-release properties.

## Description

### TECHNICAL FIELD

The present invention relates to a fluoropolyether-based curable composition that gives a cured product having durability to hydrofluoric acid and electrolyte solutions for lithium-ion batteries and having good releasability without uncured portions due to low compatibility between constituent components, to a cured product of the composition, and to an electric/electronic component including the cured product.

### BACKGROUND ART

Fluoropolyether-based curable compositions utilizing the addition reaction between alkenyl groups and hydrosilyl groups are known. For example, as curable compositions, compositions each containing a fluoropolyether compound that has two or more alkenyl groups in one molecule and that has a perfluoropolyether structure in the main chain (hereinafter also referred to as "base oil"), a fluorine-containing organohydrogensiloxane having two or more hydrogen atoms directly bonded to silicon atoms in one molecule, and a platinum group metal compound have been proposed (Patent Document 1: JP-A H08-199070, Patent Document 2: JP-A 2011-201940). In addition, compositions each rendered self-adhesive by the addition of an organopolysiloxane having a hydrosilyl group and an epoxy group and/or a trialkoxysilyl group as a third component (adhesion improver) have been proposed (Patent Document 3: JP-A H09-95615, Patent Document 4: JP-A 2011-219692). These compositions can be cured by heating for a short time, and the resulting cured products (fluoropolyether-based cured products) are excellent in solvent resistance, chemical resistance, heat resistance, low-temperature properties, low moisture permeability, electrical properties, and so forth and thus are used in various industrial fields where these properties are required.

Fluoropolyether-based curable compositions containing a fluorine-containing organohydrogensiloxane having two or more hydrogen atoms directly bonded to silicon atoms in one molecule contain siloxane bonds, which are unstable to acids, and cannot exhibit sufficient performance in applications where high levels of acid resistance are required. In particular, these cured products have low durability to hydrofluoric acid and are therefore not suitable for applications such as components for semiconductor production apparatuses. Accordingly, it has been proposed to improve the acid resistance of a fluoropolyether-based cured product by the use of, instead of the fluorine-containing organohydrogensiloxane, a fluorine-containing organohydrogensilane compound containing no siloxane bond and having two or more hydrogen atoms directly bonded to silicon atoms in one molecule (Patent Document 5: JP-A 2002-012769).

On the other hand, in the fluorine-containing organohydrogensilane compound, the proportion of a non-fluorinated organic structure in the entire molecule tends to be large. This is largely associated with the synthesis of the fluorine-containing organohydrogensilane compound. In this case, short-chain perfluoroalkylene groups are poor in compatibility with a base oil. Due to these tendencies, when the fluorine-containing organohydrogensilane compound is added to a fluoropolyether-based curable composition, the resulting fluoropolyether-based curable composition may become cloudy and have high viscosity. In addition, the surface of a fluoropolyether-based cured product obtained from the fluoropolyether-based curable composition may be dotted with oily uncured portions. These uncured portions often impair the releasability of the fluoropolyether-based cured product, which is not preferred since it can cause the problem that, in the process of producing an article including the cured product, the cured product cannot be removed from a component within the production equipment and thus hinders smooth production.

Recently, with the growing interest in environmental issues, considerable efforts have been made in the development of products using lithium-ion batteries worldwide. However, it has been found that fluoropolyether-based curable compositions containing the fluorine-containing organohydrogensiloxane having two or more hydrogen atoms directly bonded to silicon atoms in one molecule and cured products thereof have low durability to electrolyte solutions for lithium-ion batteries and are therefore difficult to apply to this use. In addition, there is no knowledge about the durability to electrolyte solutions for lithium-ion batteries of fluoropolyether-based curable compositions containing, instead of the fluorine-containing organohydrogensiloxane, a fluorine-containing organohydrogensilane compound containing no siloxane bond and having two or more hydrogen atoms directly bonded to silicon atoms in one molecule and cured products thereof, and it is uncertain whether they are applicable to this use.

### PRIOR ART DOCUMENTS

### PATENT DOCUMENTS

Patent Document 1: JP-A H08-199070
Patent Document 2: JP-A 2011-201940
Patent Document 3: JP-A H09-95615
Patent Document 4: JP-A 2011-219692
Patent Document 5: JP-A 2002-012769

### SUMMARY OF INVENTION

### TECHNICAL PROBLEM

The present invention has been made in view of the above circumstances, and an object of the present invention is to provide a fluoropolyether-based curable composition that gives a cured product having durability to hydrofluoric acid and electrolyte solutions for lithium-ion batteries and having good releasability without uncured portions due to low compatibility between constituent components, a cured product of the composition, and an electric/electronic component including the cured product.

### SOLUTION TO PROBLEM

The inventors have conducted intensive studies to solve the above problems and have found that, when a fluorine-containing organohydrogensilane compound obtained by introducing a compound having a monovalent perfluoropolyether group and an alkenyl group into an organohydrogensilane compound having three or more hydrosilyl groups and having a predetermined structure is used as a curing agent for a fluoropolyether-based curable composition, the fluorine-containing organohydrogensilane compound exhibits high compatibility with a base oil, that is, a perfluoropolyether compound having alkenyl groups. The inventors have also found that a cured product obtained by curing a fluoropolyether-based curable composition obtained by adding the fluorine-containing organohydrogensilane compound exhibits durability to hydrofluoric acid and electrolyte solution for lithium-ion batteries and has good releasability without uncured portions in the surface thereof. These findings have led to the completion of the present invention.

Accordingly, the present invention provides a fluoropolyether-based curable composition, a cured product obtained from the curable composition, and an electric/electronic component including the cured product, as described below.
[1] A fluoropolyether-based curable composition containing:
   (A) 100 parts by weight of a perfluoropolyether compound having two or more alkenyl groups in one molecule;
   (B) a fluorine-containing organohydrogensilane compound having two or more hydrosilyl groups represented by the following general formula (1), wherein the amount of the fluorine-containing organohydrogensilane compound is an amount such that the amount of hydrogen atoms bonded to silicon atoms in the component (B) is 0.1 to 2.5 mol per 1 mol of alkenyl groups in the component (A): 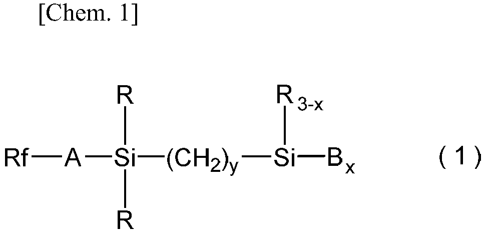 wherein Rf is a monovalent perfluoropolyether group, A is a divalent organic group that has 1 to 20 carbon atoms and that may contain at least one selected from an oxygen atom, a nitrogen atom, and a silicon atom, each R is independently a monovalent hydrocarbon group having 1 to 6 carbon atoms, x is an integer of 1 to 3, each B is independently a monovalent organic group that has one or more diorganohydrosilyl groups and that forms a silalkylene structure with a silicon atom coupled thereto, or when x is 1, B has two or more diorganohydrosilyl groups, and y is 1 or 2; and
   (C) a platinum group metal-based catalyst in an amount of 0.1 to 2,000 ppm in terms of the weight of platinum group metal atoms with respect to the component (A).
[2] The fluoropolyether-based curable composition according to [1], wherein the component (A) is a perfluoropolyether compound represented by the following general formula (2): 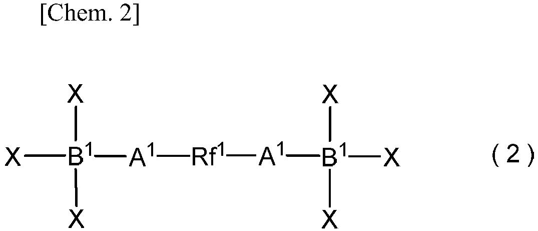 wherein each A¹ is independently a divalent organic group that has 1 to 20 carbon atoms and that may contain at least one selected from an oxygen atom, a nitrogen atom, and a silicon atom, each B¹ is a carbon atom or a silicon atom, each X is independently a hydrogen atom, a methyl group, or an alkenyl group having 2 to 8 carbon atoms, provided that at least two X groups are alkenyl groups having 2 to 8 carbon atoms, and when X is a hydrogen atom, B¹ bonded thereto is a carbon atom, and Rf¹ is a divalent perfluoropolyether group.
[3] The fluoropolyether-based curable composition according to [1] or [2], wherein Rf in general formula (1) of the component (B) is a group represented by the following general formula (5): 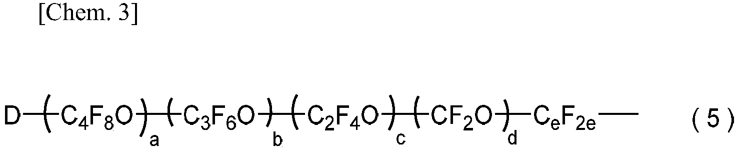 wherein D is a fluorine atom or a perfluorooxyalkyl group having 1 to 6 carbon atoms, a, b, c, and d are each independently an integer of 0 to 100, 2 ≤ a + b + c + d ≤ 100, e is an integer of 1 to 3, repeating units indicated in parentheses may be randomly bonded, and each of these units may be linear or branched.
[4] The fluoropolyether-based curable composition according to any one of [1] to [3], wherein A in general formula (1) of the component (B) is selected from an alkylene group having 1 to 12 carbon atoms, an alkylene group containing an arylene group having 6 to 8 carbon atoms, a divalent group in which alkylene groups are bonded to each other with a diorganosilylene group provided therebetween, a divalent group in which an alkylene group is bonded to an arylene group with a diorganosilylene group provided therebetween, and a divalent group in which any of these groups further has at least one selected from an oxygen atom of an ether bond, a secondary amino group, a tertiary amino group, and an amide bond.
[5] The fluoropolyether-based curable composition according to any one of [1] to [4], wherein A in general formula (1) of the component (B) is any of groups represented by the following general formulae (6) to (9): 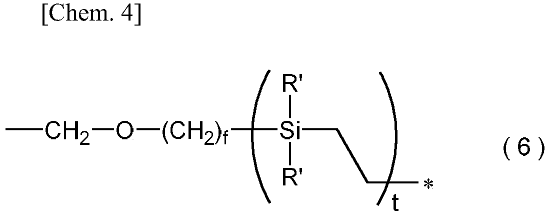 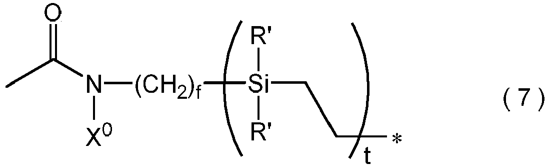 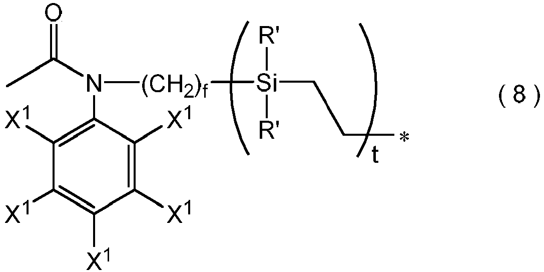 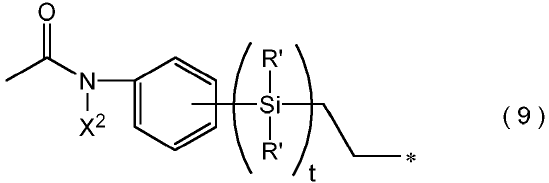 wherein X⁰ is a hydrogen atom, a methyl group, or an ethyl group, each X' is independently a hydrogen atom, a fluorine atom, a methyl group, an ethyl group, or a trifluoromethyl group, X² is a hydrogen atom, a methyl group, an ethyl group, an isopropyl group, or a phenyl group, each R' is independently a methyl group or an ethyl group, f is an integer of 1 to 6, t is 0 or 1, bonds marked with * are each attached to a Si atom in general formula (1), and unmarked bonds are each attached to Rf.
[6] The fluoropolyether-based curable composition according to any one of [1] to [5], wherein each R in general formula (1) of the component (B) is any of a methyl group, an ethyl group, an isopropyl group, a tert-butyl group, and a phenyl group.
[7] The fluoropolyether-based curable composition according to any one of [1] to [6], wherein the number of consecutive silalkylene structures in a molecular chain between Rf and the diorganohydrosilyl groups in B in general formula (1) of the component (B) is two or more.
[8] The fluoropolyether-based curable composition according to any one of [1] to [7], wherein B in general formula (1) of the component (B) is a group represented by the following general formula (10): 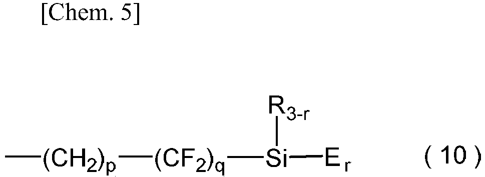 wherein p is an integer of 1 to 6, q is an integer of 0 to 6, r is an integer of 1 to 3, R is as defined above, E is a hydrogen atom or a group represented by the following formula: 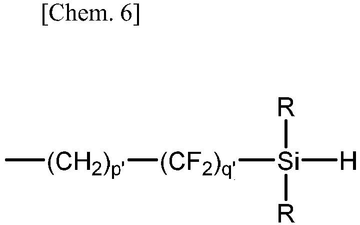 wherein R is as defined above, p' is an integer of 1 to 6, and q' is an integer of 0 to 6, provided that when E is a hydrogen atom, r is 1, and repeating units indicated in parentheses with p and q or with p' and q' may be randomly bonded.
[9] The fluoropolyether-based curable composition according to any one of [1] to [8], wherein the component (B) is selected from fluorine-containing organohydrogensilane compounds represented by the following formulae: 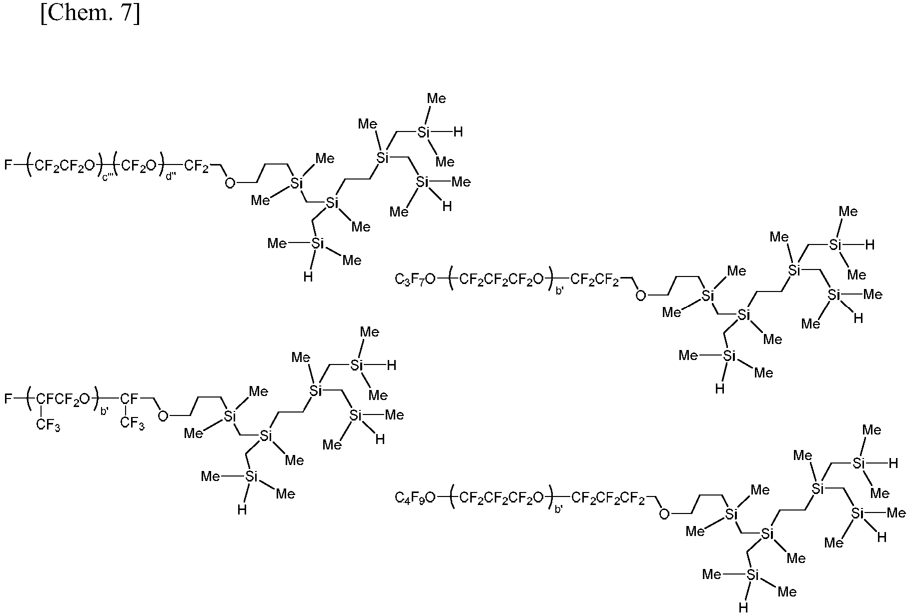 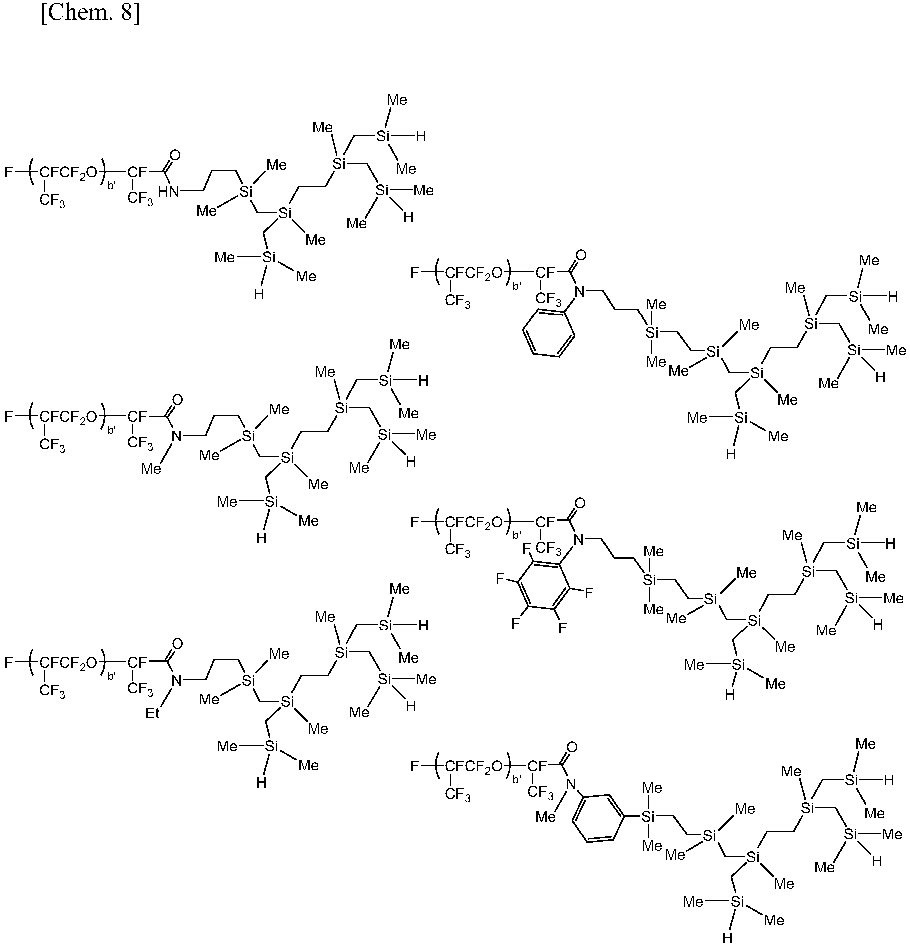 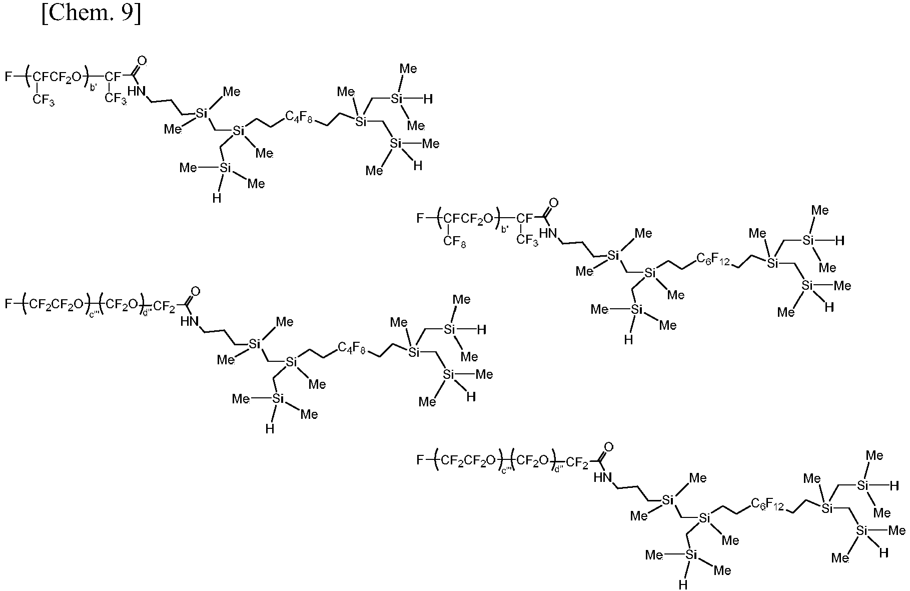 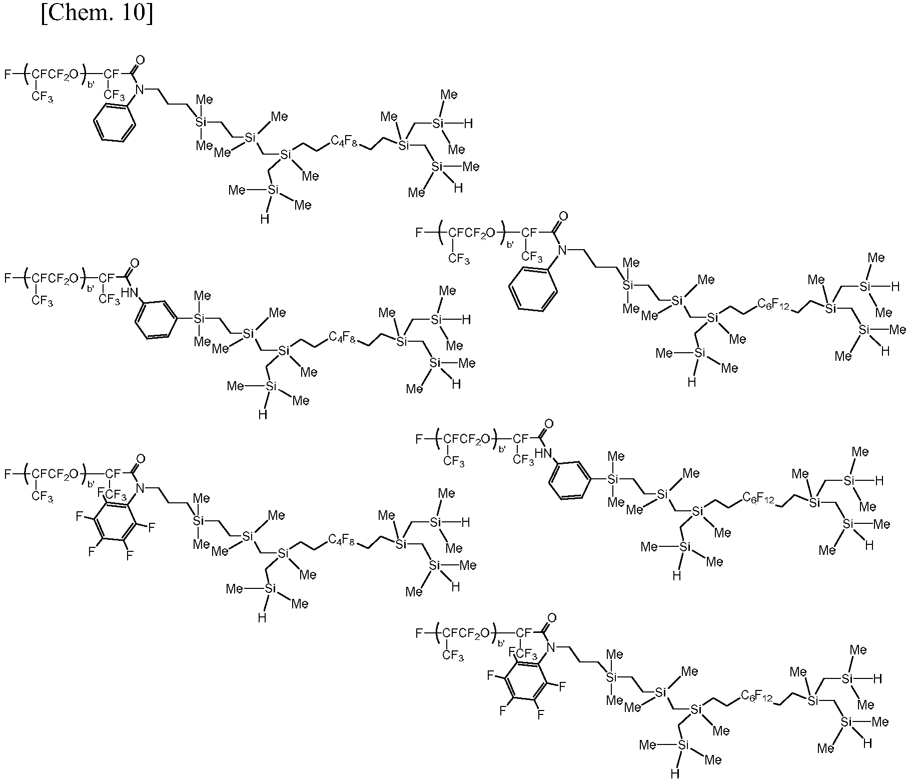 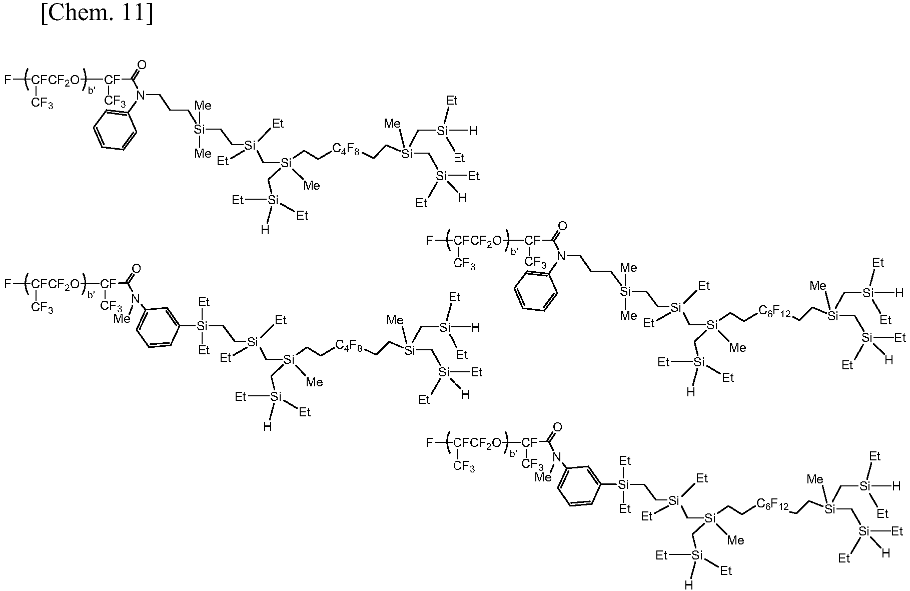 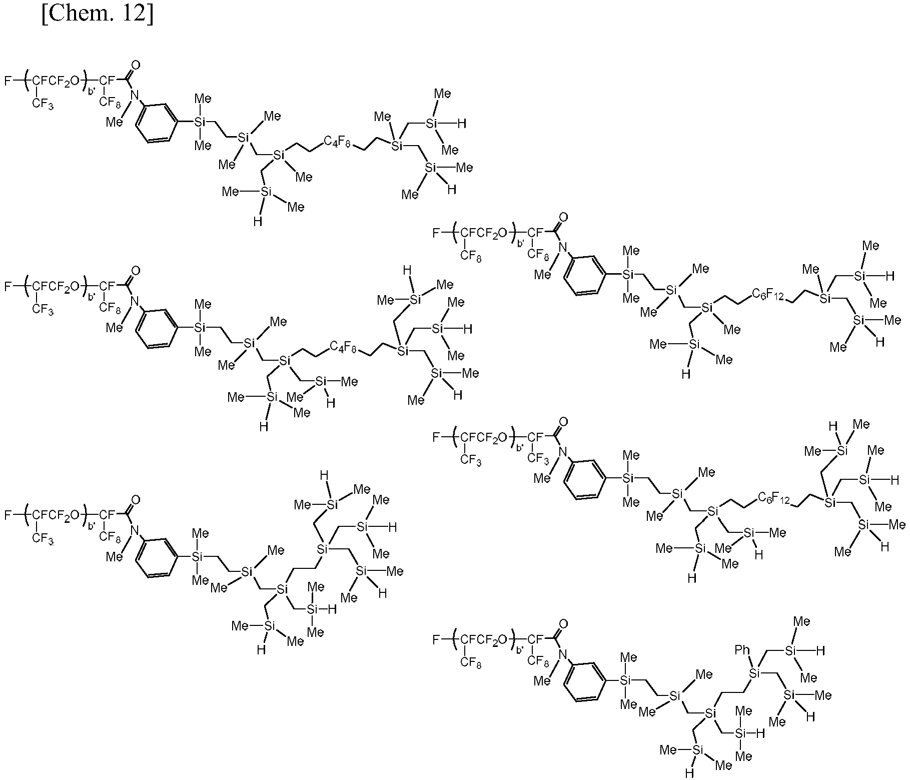 wherein b' is an integer of 2 to 100, c'" and d" are each an integer of 1 to 99, c'" + d" is an integer of 2 to 100, Me is a methyl group, Et is an ethyl group, Ph is a phenyl group, and repeating units indicated in parentheses with c"' and d" may be randomly bonded.
[10] A cured product obtained from the fluoropolyether-based curable composition according to any one of [1] to [9].
[11] An electric/electronic component including the cured product according to [10].
[12] The electric/electronic component according to [11], wherein the cured product is a gasket, packing, a protective seal, or a coating layer.
[13] The electric/electronic component according to [11] or [12], wherein the electric/electronic component is used for automobiles, chemical plants, semiconductor production lines, analytic or physical/chemical instruments, living environments, communication devices, communication equipment, aircraft, railroad cars, portable devices, power storage devices, robots, or lithium-ion batteries.

### ADVANTAGEOUS EFFECTS OF INVENTION

Because the fluoropolyether-based curable composition of the present invention contains a fluorine-containing organohydrogensilane compound that has a particular structure and that exhibits high compatibility with the base oil, that is, the component (A), the composition does not exhibit clouding or an increase in viscosity. In addition, the composition can be cured to obtain a fluoropolyether-based cured product having durability to hydrofluoric acid and electrolyte solution for lithium-ion batteries without being dotted with oily uncured portions. Furthermore, the fluoropolyether-based curable composition has excellent heat resistance, chemical resistance, and solvent resistance comparable to those of fluoropolyether-based cured products obtained from the fluoropolyether-based curable compositions described in Patent Documents 1 to 5.

### DESCRIPTION OF EMBODIMENTS

The present invention will be described in more detail below.

### [Component (A)]

The perfluoropolyether compound used as the component (A) in the fluoropolyether-based curable composition of the present invention has at least two alkenyl groups in one molecule and preferably has a divalent perfluoropolyether structure in the main chain, as shown in general formula (2) described later, and serves as a base agent (base oil) in the fluoropolyether-based curable composition of the present invention.

In the present invention, the degree of polymerization (or molecular weight) of the polyfluoro compound, which reflects, for example, the number of repetitions of perfluorooxyalkylene units constituting the perfluoropolyether structure in the main chain, can be determined, for example, as a number-average degree of polymerization (or number-average molecular weight) in terms of polystyrene in gel permeation chromatography (GPC) analysis using a fluorinated solvent as a developing solvent. In addition, the number-average degree of polymerization (or number-average molecular weight) of the perfluoropolyether compound, described later, can also be calculated from ¹⁹F-NMR (the same applies hereinafter).

The component (A) is preferably a perfluoropolyether compound having a structure represented by the following general formula (2): 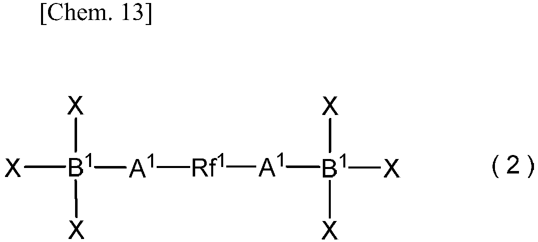 (wherein each A¹ is independently a divalent organic group that has 1 to 20 carbon atoms and that may contain at least one selected from an oxygen atom, a nitrogen atom, and a silicon atom, each B¹ is a carbon atom or a silicon atom, each X is independently a hydrogen atom, a methyl group, or an alkenyl group having 2 to 8 carbon atoms, provided that at least two X groups are alkenyl groups having 2 to 8 carbon atoms, and when X is a hydrogen atom, B¹ bonded thereto is a carbon atom, and Rf¹ is a divalent perfluoropolyether group).

In general formula (2) above, each A¹ is independently a divalent organic group that has 1 to 20 carbon atoms and that may contain at least one selected from an oxygen atom, a nitrogen atom, and a silicon atom, preferably a divalent hydrocarbon group that has 1 to 20 carbon atoms and that may contain at least one selected from an oxygen atom, a nitrogen atom, and a silicon atom. Each A' is preferably any group selected from -(CH₂)_{f}-*, -OCH₂-*, -(CH₂)_{f}OCH₂-*, -(CH₂)_{f}-NX²-CO-*, -(CH₂)_{f}-O-CO-*, and groups represented by the following general formulae (3) and (4). Bonds marked with * are each attached to Rfl, and unmarked bonds are each attached to B¹. 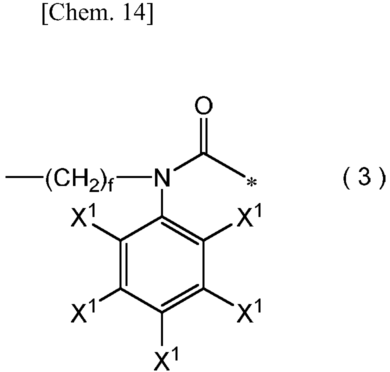 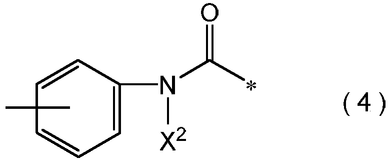 (wherein each X¹ is independently a hydrogen atom, a fluorine atom, a methyl group, an ethyl group, or a trifluoromethyl group, X² is a hydrogen atom, a methyl group, an ethyl group, an isopropyl group, or a phenyl group, and f is an integer of 1 to 6).

Examples of A¹ include -CH₂-*, -CH₂CH₂CH₂-*, -OCH₂-*, -CH₂OCH₂-*, -(CH₂)₂OCH₂-*, -(CH₂)₃OCH₂-*, -CH₂-NH-CO-*, -CH₂-N(Me)-CO-*, -CH₂CH₂-NH-CO-*, -(CH₂)₃-NH-CO-*, -(CH₂)₃-N(Me)-CO-*, -(CH₂)₃-N(Et)-CO-*, -(CH₂)₃-N(CH(Me)₂)-CO-*, -(CH₂)₃-O-CO-*, and groups represented by the following general formulae (3A), (3B), (3C), (3D), (4A), (4B), and (4C). Among these, A¹ is preferably a group represented by general formula (3A) or (4A). Bonds marked with * are each attached to Rf¹, and unmarked bonds are each attached to B¹. In addition, Me is a methyl group, and Et is an ethyl group.

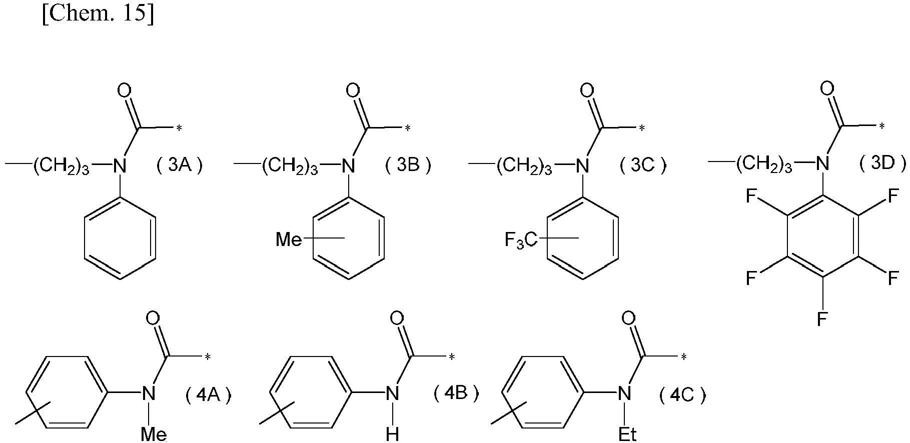

In general formula (2) above, each B¹ is a carbon atom or a silicon atom.

In addition, each X is independently a hydrogen atom, a methyl group, or an alkenyl group having 2 to 8 carbon atoms, provided that at least two X groups are alkenyl groups having 2 to 8 carbon atoms. Of the six X groups present in the molecule (i.e., three X groups at each end of the molecular chain), at least two X groups (in particular, of the three X groups present at each end of the molecular chain, at least one X) are alkenyl groups. The alkenyl groups are preferably those having 2 to 8 carbon atoms, particularly 2 to 6 carbon atoms, and having a CH₂=CH- structure at the end thereof. Examples of such alkenyl groups include a vinyl group, an allyl group, a propenyl group, an isopropenyl group, a butenyl group, and a hexenyl group. Among these, a vinyl group and an allyl group are preferred. When X is not an alkenyl group, X is a hydrogen atom or a methyl group when B¹ is a carbon atom, and is a methyl group when B¹ is a silicon atom.

In general formula (2) above, Rf¹ is a divalent perfluoropolyether group containing repeating units of -C_{g}F_{2g}O- (wherein g is an integer of 1 to 6). Examples of Rf¹ include groups represented by the following formula (11):

-(C_{g}F_{2g}O)ₕ- (11)

(wherein g is an integer of 1 to 6, and h is an integer of 5 to 600, preferably an integer of 10 to 400, more preferably an integer of 30 to 200).

Examples of repeating units represented by the formula -C_{g}F_{2g}O- include units represented by the following formulae:

-CF₂O-

-CF₂CF₂C-

-CF₂CF₂CF₂O-

-CF(CF₃)CF₂C-

-CF₂CF₂CF₂CF₂O-

-CF₂CF₂CF₂CF₂CF₂CF₂O-

Among these, units represented by the following formulae are particular preferred:

-CF₂O-

-CF₂CF₂O-

-CF₂CF₂CF₂O-

-CF(CF₃)CF₂O-

Of these, the divalent perfluoropolyether group may be composed of one type of repeating unit alone, or may be composed of a combination of two or more types of repeating units.

In addition, the divalent perfluoropolyether group preferably contains a structure of any of the following formulae: 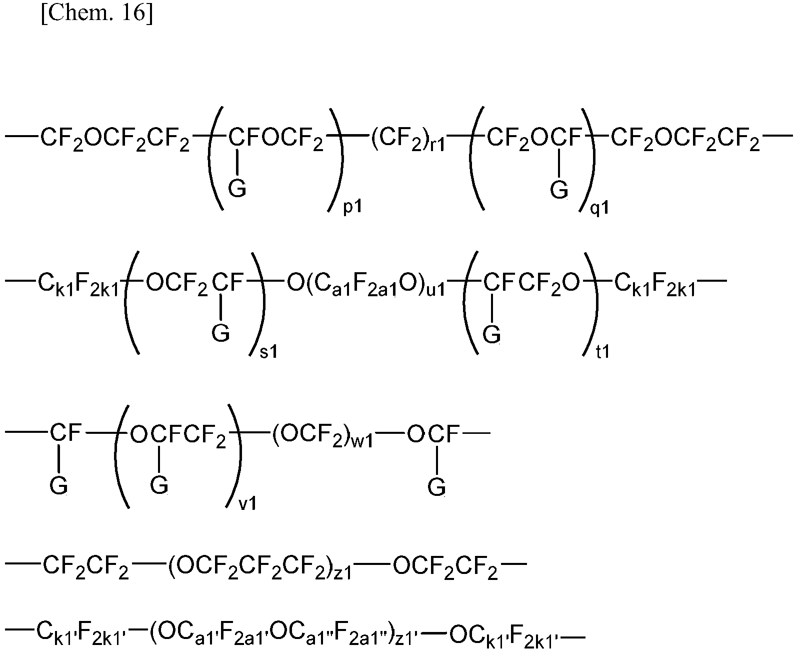 (wherein G is a fluorine atom or a trifluoromethyl group, p1, q1, and r1 are integers satisfying p1 ≥ 0, q1 ≥ 0, 0 ≤ p1 + q1 ≤ 200, particularly 2 ≤ p1 + q1 ≤ 150, and 0 ≤ r1 ≤ 6 (when p1 + q1 = 0, 1 ≤ r1 ≤ 6), k1, a1, s1, t1, and u1 are integers satisfying 1 ≤ k1 ≤ 3, 2 ≤ a1 ≤ 6, 0 ≤ s1 ≤ 100, 0 ≤ t1 ≤ 100, 2 ≤ s1 + t1 ≤ 200, 0 ≤ u1 ≤ 6, particularly 2 ≤ s1 + t1 ≤ 150 and 0 ≤ u1 ≤ 4, and 2 ≤ s1 + t1 + u1 ≤ 150, v1 and w1 are integers satisfying 1 ≤ v1 ≤ 100, 1 ≤ w1 ≤ 100, and 2 ≤ v1 + w1 ≤ 200, z1 is an integer satisfying 1 ≤ z1 ≤ 200, k1', a1', and a1" are integers satisfying 1 ≤ k1' ≤ 3, 1 ≤ a1' ≤ 6, 1 ≤ a1" ≤ 6, and a1' ≠ a1", z1' is an integer satisfying 1 ≤ z1' ≤ 200, and repeating units indicated in parentheses with v1 and w1 may be randomly bonded).

Specific examples of Rf¹ in general formula (2) above include groups represented by the following formulae: 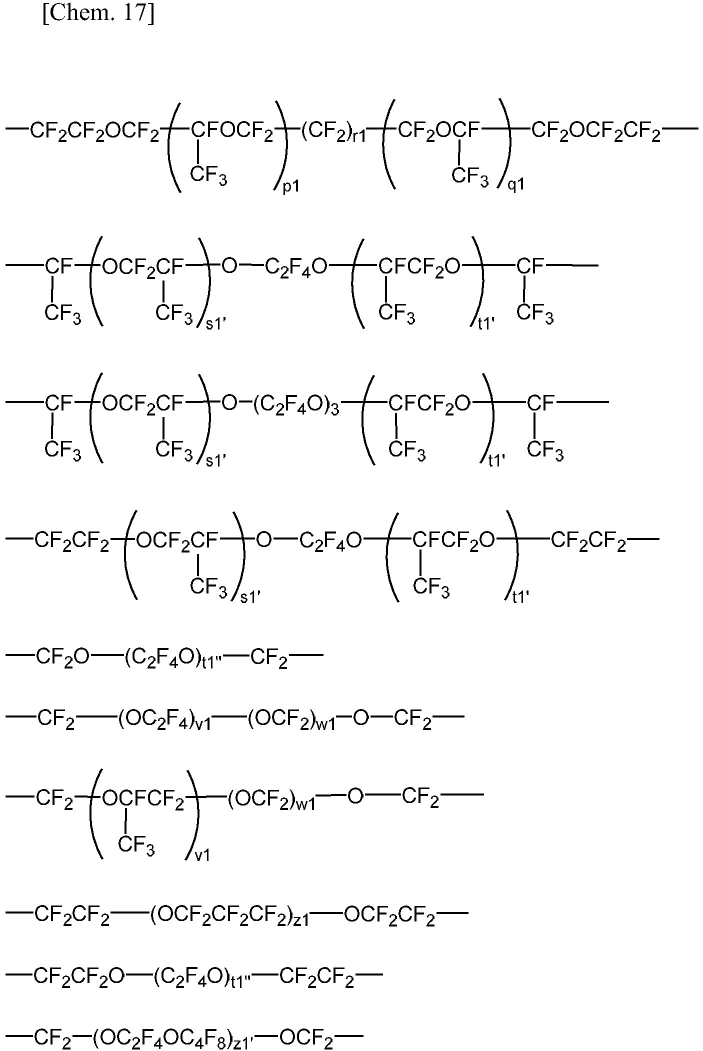 (wherein p1, q1, r1, v1, w1, z1, and z1' are as defined above, s1' and t1' are each an integer of 1 to 100, s1' + t1' is an integer of 2 to 200, t1" is an integer of 2 to 100, and repeating units indicated in parentheses with v1 and w1 may be randomly bonded).

When B¹ is a silicon atom, compounds represented by the following formulae are particularly preferred as the perfluoropolyether compound represented by general formula (2) above. In the formulae, Me is a methyl group, and Et is an ethyl group. 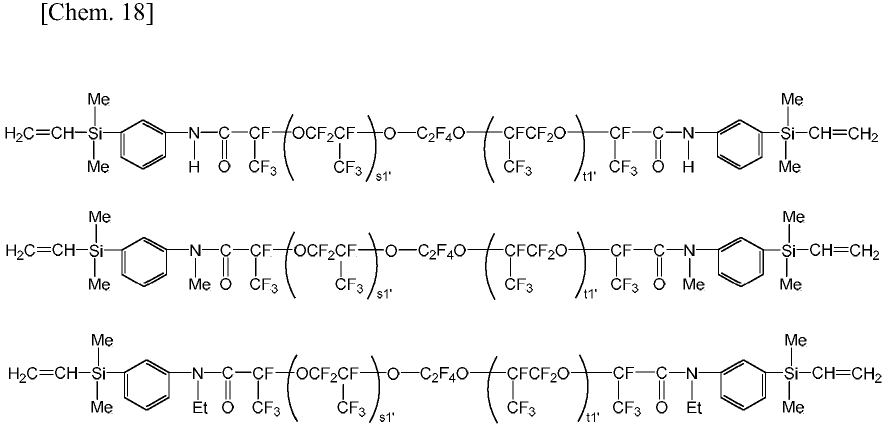 (wherein s1' and t1' are each an integer of 1 to 100, and s1' + t1' is an integer of 2 to 200). 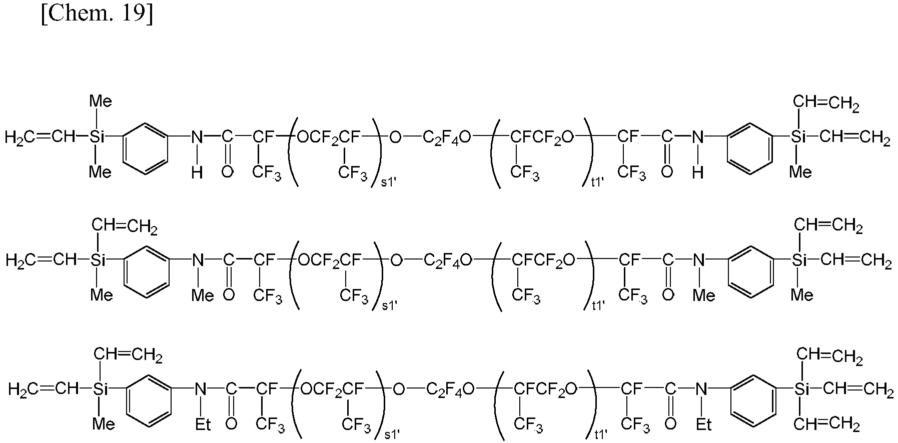 (wherein s1' and t1' are each an integer of 1 to 100, and s1' + t1' is an integer of 2 to 200). 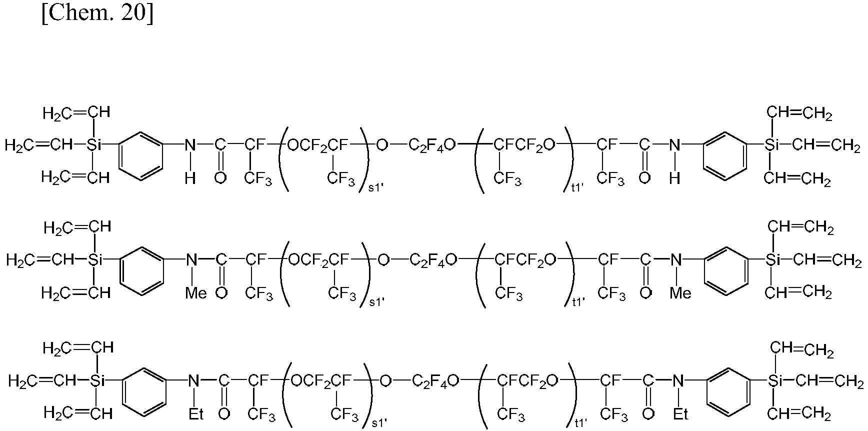 (wherein s1' and t1' are each an integer of 1 to 100, and s1' + t1' is an integer of 2 to 200). 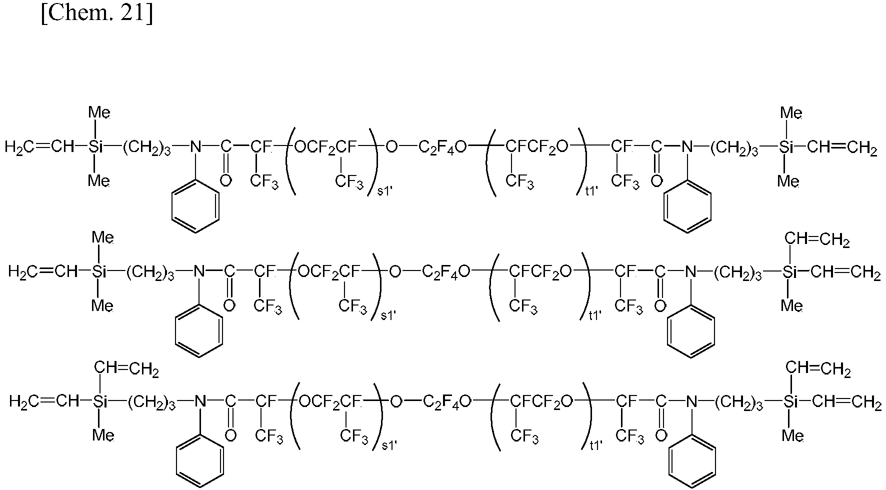 (wherein s1' and t1' are each an integer of 1 to 100, and s1' + t1' is an integer of 2 to 200). 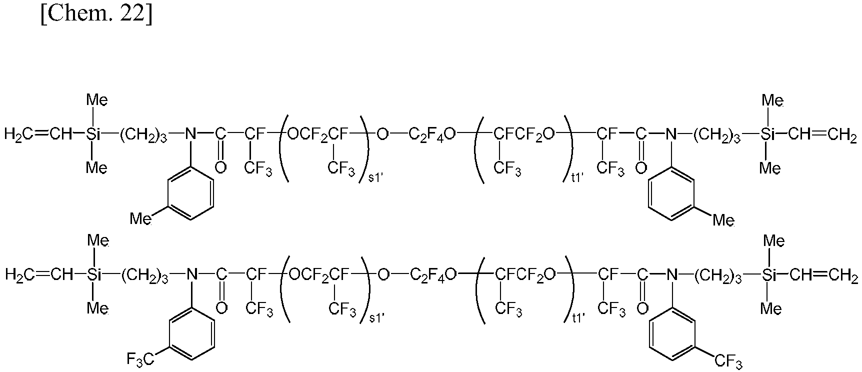 (wherein s1' and t1' are each an integer of 1 to 100, and s1' + t1' is an integer of 2 to 200).

When B¹ is a carbon atom, compounds represented by the following formulae are preferred as the perfluoropolyether compound represented by general formula (2) above. 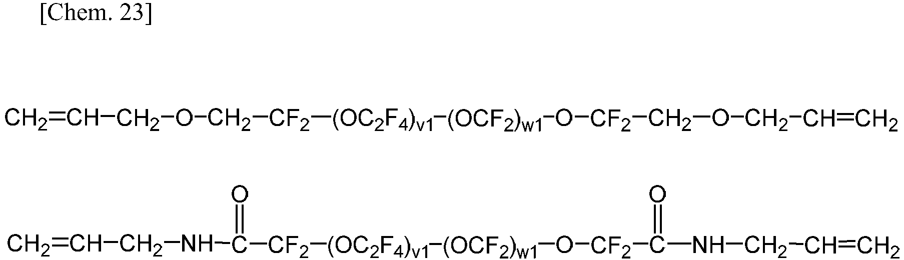 (wherein v1 and w1 are each an integer of 1 to 100, v1 + w1 is an integer of 2 to 200, and repeating units indicated in parentheses with v1 and w1 may be randomly bonded).

The amount of alkenyl groups in the perfluoropolyether compound used as the component (A) is preferably 0.002 to 0.3 mol/100 g, more preferably 0.008 to 0.12 mol/100 g. If the amount of alkenyl groups in the perfluoropolyether compound is less than 0.002 mol/100 g or more, curing defects can occur due to an insufficient degree of crosslinking, which is not preferred. If the amount of alkenyl groups is more than 0.3 mol/100 g, the mechanical properties of the resulting cured product as a rubber elastomer can be impaired, which is not preferred. In the present invention, the amount of alkenyl groups can be measured by ¹H-NMR (the same applies to the Examples).

It is desirable that the perfluoropolyether compound used as the component (A) have a viscosity (at 23°C) of 40 to 100,000 mPa·s, more preferably 50 to 50,000 mPa·s, still more preferably 60 to 20,000 mPa·s, so that, when the fluoropolyether-based curable composition of the present invention is used for sealing, potting, coating, immersion, or the like, the cured product has suitable physical properties. The optimum viscosity can be selected within the above viscosity range depending on the use. In the present invention, viscosity (at 23°C) can be measured with, for example, a rotational viscometer (for example, a BL type, a BH type, a BS type, a cone-plate type, a rheometer, or the like) (the same applies hereinafter).

As the component (A), these perfluoropolyether compounds can be used alone or in a combination of two or more thereof.

### [Component (B)]

The component (B) used in the fluoropolyether-based curable composition of the present invention is a fluorine-containing organohydrogensilane compound having two or more hydrosilyl groups represented by the following general formula (1). Specifically, the component (B) is characterized by being a compound having two or more hydrosilyl groups in which linkages of silicon atoms coupled to each other are each composed of a silalkylene structure (alkylene groups in the silalkylene structures may be fluorine-substituted alkylene groups that have been partially substituted with fluorine), and contains no siloxane bond. 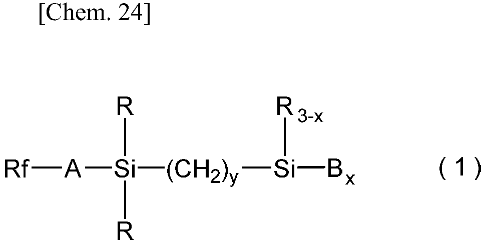 (wherein Rf is a monovalent perfluoropolyether group, A is a divalent organic group that has 1 to 20 carbon atoms and that may contain at least one selected from an oxygen atom, a nitrogen atom, and a silicon atom, each R is independently a monovalent hydrocarbon group having 1 to 6 carbon atoms, x is an integer of 1 to 3, each B is independently a monovalent organic group that has one or more diorganohydrosilyl groups and that forms a silalkylene structure with a silicon atom coupled thereto, or when x is 1, B has two or more diorganohydrosilyl groups, and y is 1 or 2).

Rf in general formula (1) above is a monovalent perfluoropolyether group. Rf is introduced to impart compatibility with the base oil in the fluoropolyether-based curable composition (particularly, a thermosetting fluoropolyether-based composition). The perfluoropolyether group is more effective than a perfluoroalkyl group in imparting compatibility with the base oil when introduced into an organohydrogensilane compound, and can give a fluoropolyether-based cured product having good properties.

In particular, Rf in general formula (1) above is preferably a monovalent perfluoropolyether group represented by the following general formula (5): 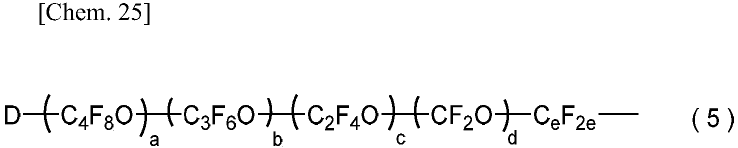 (wherein D is a fluorine atom or a perfluorooxyalkyl group having 1 to 6 carbon atoms, a, b, c, and d are each independently an integer of 0 to 100, 2 ≤ a + b + c + d ≤ 100, preferably a is an integer of 0 to 50, b is an integer of 0 to 50, c is an integer of 0 to 50, d is an integer of 0 to 50, and 5 ≤ a + b + c + d ≤ 50, more preferably a is an integer of 0 to 10, b is an integer of 0 to 40, c is an integer of 0 to 30, d is an integer of 0 to 30, and 6 ≤ a + b + c + d ≤ 40, still more preferably 7 ≤ a + b + c + d ≤ 30, e is an integer of 1 to 3, repeating units indicated in parentheses may be randomly bonded, and each of these units may be linear or branched).

In general formula (5) above, D is a fluorine atom or a perfluorooxyalkyl group having 1 to 6 carbon atoms. The perfluorooxyalkyl group having 1 to 6 carbon atoms may be represented by C_{g}F_{2g}+₁O- (wherein g is an integer of 1 to 6). Specific examples thereof include groups represented by the following formulae:

CF₃O-

CF₃CF₂O-

CF₃CF₂CF₂O-

CF₃CF(CF₃)O-

CF₃CF₂CF₂CF₂O-

CF₃CF₂CF₂CF₂CF₂CF₂O-

D is preferably a fluorine atom.

In general formula (5) above, when a + b + c + d is less than 2, the compatibility between the fluorine-containing organohydrogensilane compound and the base oil may be lowered, which is not preferred. On the other hand, when a + b + c + d is more than 100, the fluorine-containing organohydrogensilane compound has high viscosity, and a thermosetting fluoropolyether-based composition to which the fluorine-containing organohydrogensilane compound is added also has excessively high viscosity, which is not preferred.

Examples of the monovalent perfluoropolyether group represented by general formula (5) above include the following groups: 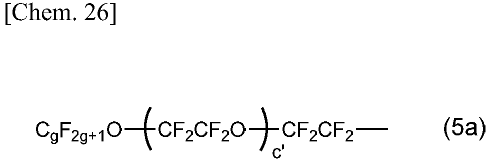 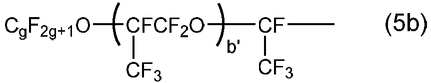 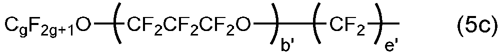 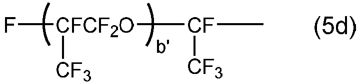 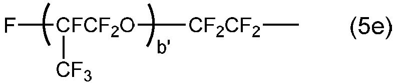 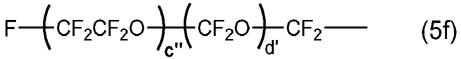 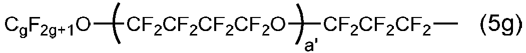 (wherein g is an integer of 1 to 6, c' is an integer of 2 to 100, b' is an integer of 2 to 100, e' is 2 or 3, c" and d' are each an integer of 0 to 100, c" + d' is an integer of 2 to 100, a' is an integer of 2 to 100, and repeating units indicated in parentheses with c" and d' may be randomly bonded).

In general formula (1) above, A is a divalent organic group that has 1 to 20 carbon atoms and that may contain at least one selected from an oxygen atom, a nitrogen atom, and a silicon atom, preferably a divalent hydrocarbon group that has 1 to 20 carbon atoms and that may contain at least one selected from an oxygen atom, a nitrogen atom, and a silicon atom. Examples of A include an alkylene group having 1 to 12 carbon atoms, an alkylene group having 1 to 12 carbon atoms and containing an arylene group having 6 to 8 carbon atoms (for example, an alkylene-arylene group having 8 to 20 carbon atoms), a divalent group in which alkylene groups having 1 to 10 carbon atoms are coupled to each other with a diorganosilylene group provided therebetween, a divalent group in which an alkylene group having 1 to 10 carbon atoms and an arylene group having 6 to 8 carbon atoms are coupled to each other with a diorganosilylene group provided therebetween, and a divalent group in which any of these groups further has at least one selected from an oxygen atom of an ether bond, a secondary amino group (imino group), a tertiary amino group (substituted imino group), and an amide bond. Among these, A is preferably a divalent group containing, in its molecular chain, at least one selected from an oxygen atom of an ether bond, a secondary amino group (imino group), a tertiary amino group (substituted imino group), and an amide bond. When A contains a silicon atom (diorganosilylene group), the silicon atom (diorganosilylene group) and the silicon atom to which A is coupled preferably form a silalkylene structure in which the silicon atoms are coupled to each other with an alkylene group (preferably an unsubstituted or fluorine-substituted alkylene group having 1 to 12 carbon atoms, more preferably an ethylene group) provided therebetween.

Specifically, A is preferably a group represented by any of the following general formulae (6) to (9): 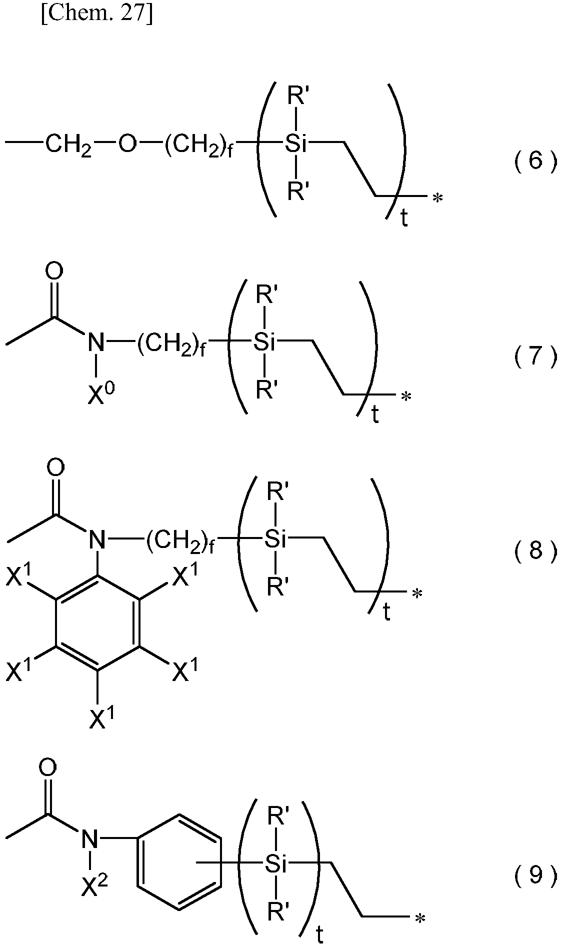 (wherein X⁰ is a hydrogen atom, a methyl group, or an ethyl group, each X' is independently a hydrogen atom, a fluorine atom, a methyl group, an ethyl group, or a trifluoromethyl group, X² is a hydrogen atom, a methyl group, an ethyl group, an isopropyl group, or a phenyl group, each R' is independently a methyl group or an ethyl group, f is an integer of 1 to 6, t is 0 or 1, bonds marked with * are each attached to a Si atom in general formula (1) above, and unmarked bonds are each attached to Rf).

Examples of the structures of A represented by general formulae (6) to (9) above include the following structures: 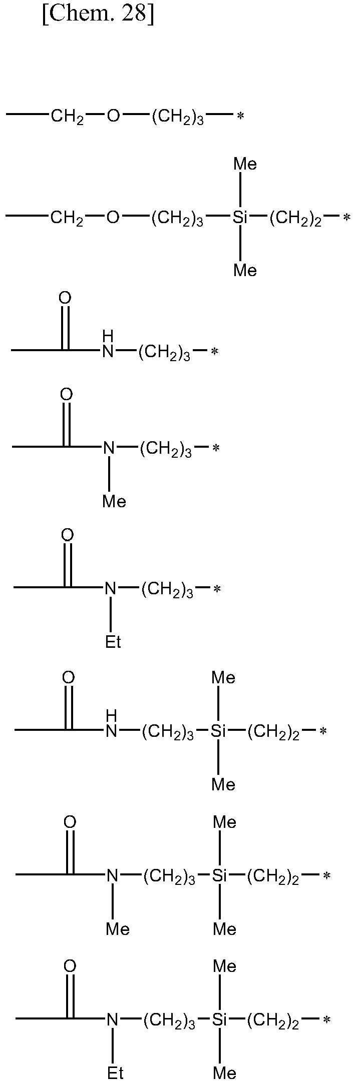 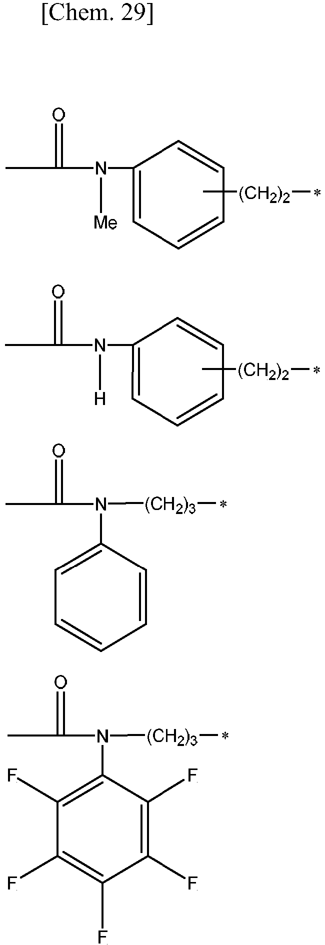 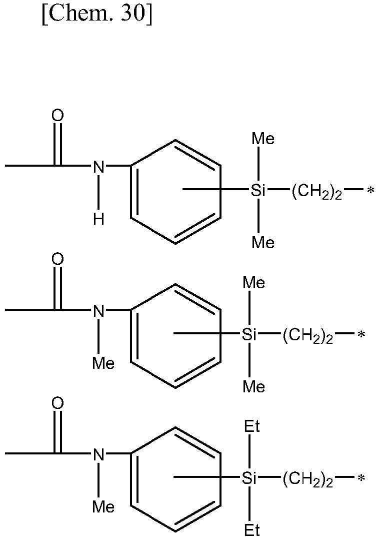 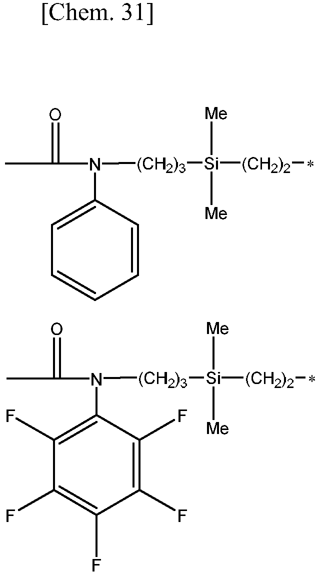 (wherein Me is a methyl group, Et is an ethyl group, bonds marked with * are each attached to a Si atom in general formula (1) above, and unmarked bonds are each attached to Rf).

Each R in general formula (1) above is independently a monovalent hydrocarbon group having 1 to 6 carbon atoms. Specifically, R is preferably a methyl group, an ethyl group, an isopropyl group, a tert-butyl group, or a phenyl group, more preferably a methyl group or an ethyl group.

In general formula (1) above, B is a monovalent organic group that has one or more diorganohydrosilyl groups and that forms a silalkylene structure with a silicon atom coupled thereto. Specifically, when x is 1, B is a monovalent silicon-containing organic group that has two or more, preferably two to five, diorganohydrosilyl groups and that forms a silalkylene structure with a silicon atom coupled thereto, or when x is 2 or 3, each B is independently a monovalent silicon-containing organic group that has one or more, preferably one to three, diorganohydrosilyl groups and that forms a silalkylene structure with the silicon atom coupled thereto. B does not contain a siloxane bond. The silalkylene structure is preferably a structure in which silicon atoms are coupled to each other with an unsubstituted and/or fluorine-substituted alkylene group R^{A} having 1 to 12 carbon atoms provided therebetween. In addition, B preferably has one or more silicon atoms, more preferably one to six silicon atoms, still more preferably one to four silicon atoms. In formula (1), one to three B groups are bonded to the silicon atom (x is an integer of 1 to 3). Preferably, two or three B groups are bonded to the silicon atom (preferably, x is 2 or 3).

In addition, the number of consecutive silalkylene structures in the molecular chain between Rf and the diorganohydrosilyl groups in B in general formula (1) above (i.e., consecutive silalkylene bonds (-Si-R^{A}-Si-) including -A-Si-, -Si-(CH₂)₂-Si-, and -Si-B in the formula) is preferably two or more, more preferably two, three, or four.

B is preferably a group represented by the following general formula (10): 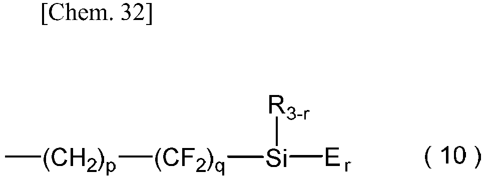 [wherein p is an integer of 1 to 6, preferably an integer of 1 to 4, q is an integer of 0 to 6, preferably 0 or an integer of 4 to 6, r is an integer of 1 to 3, R is as defined above, E is a hydrogen atom or a group represented by the following formula: 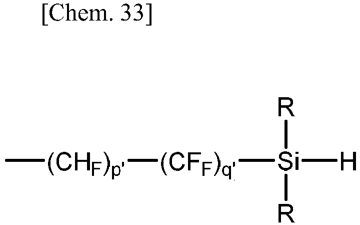 (wherein R is as defined above, p' is an integer of 1 to 6, preferably an integer of 1 to 4, and q' is an integer of 0 to 6, preferably 0 or an integer of 4 to 6) (provided that when E is a hydrogen atom, r is 1), and repeating units indicated in parentheses with p and q or with p' and q' may be randomly bonded].

R in general formula (10) above is a monovalent hydrocarbon group having 1 to 6 carbon atoms, similarly to R in general formula (1) above. Among these, a methyl group, an ethyl group, a propyl group, an isopropyl group, a tert-butyl group, and a phenyl group are particularly preferred.

Examples of B in general formula (1) above include the following groups: 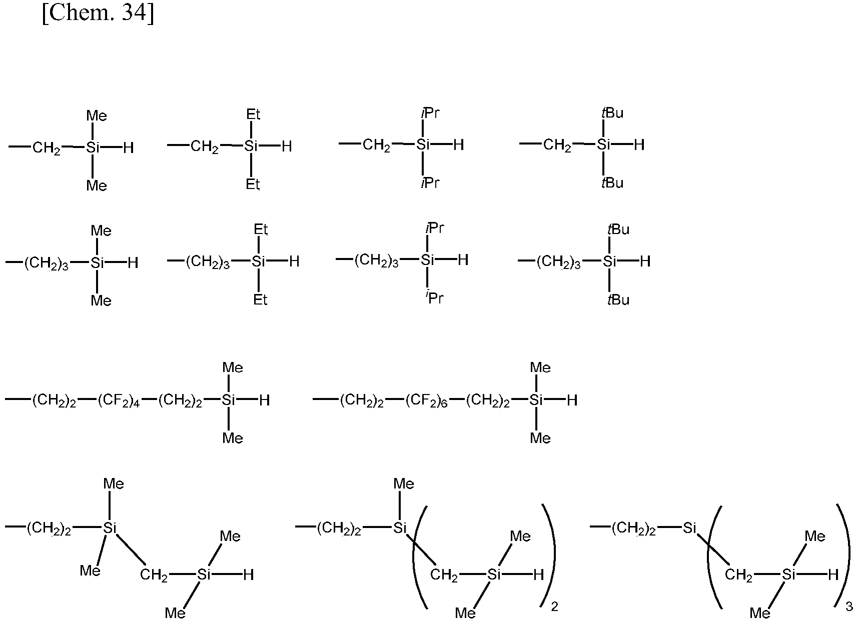 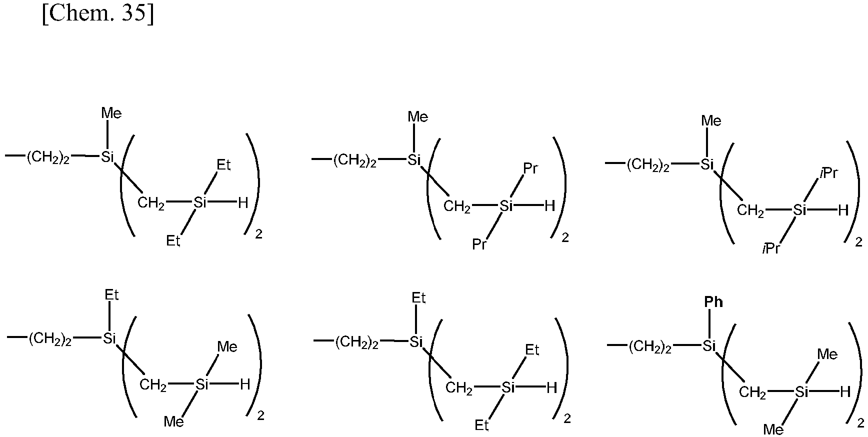 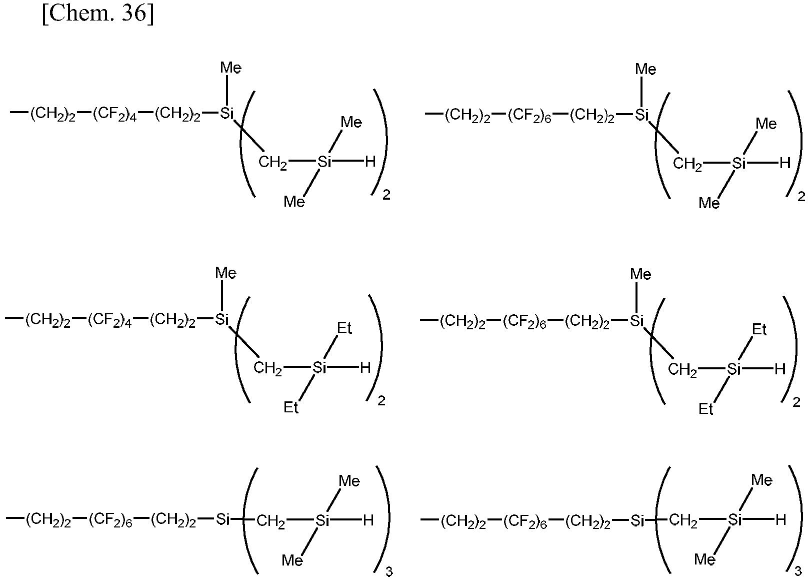 (wherein Me is a methyl group, Et is an ethyl group, iPr is an isopropyl group, tBu is a tert-butyl group, and Ph is a phenyl group).

Examples of the fluorine-containing organohydrogensilane compound represented by general formula (1) above include the following compounds: 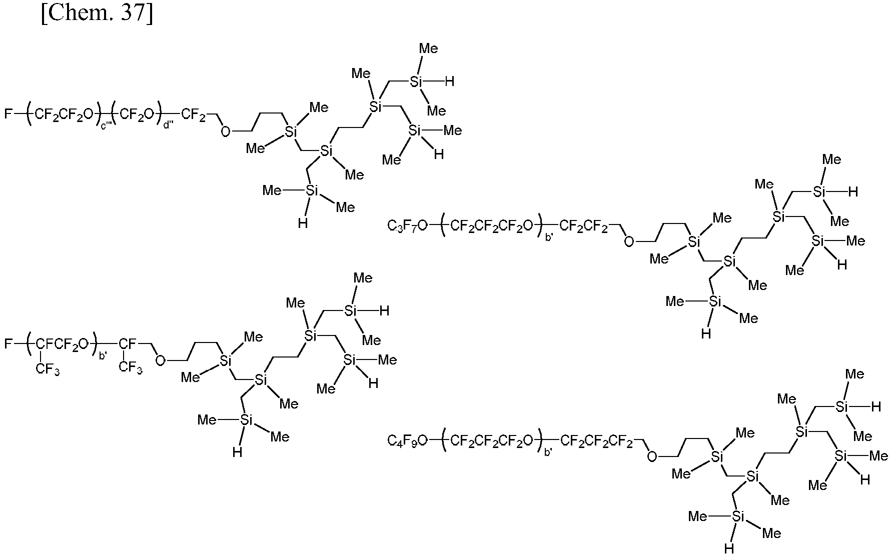 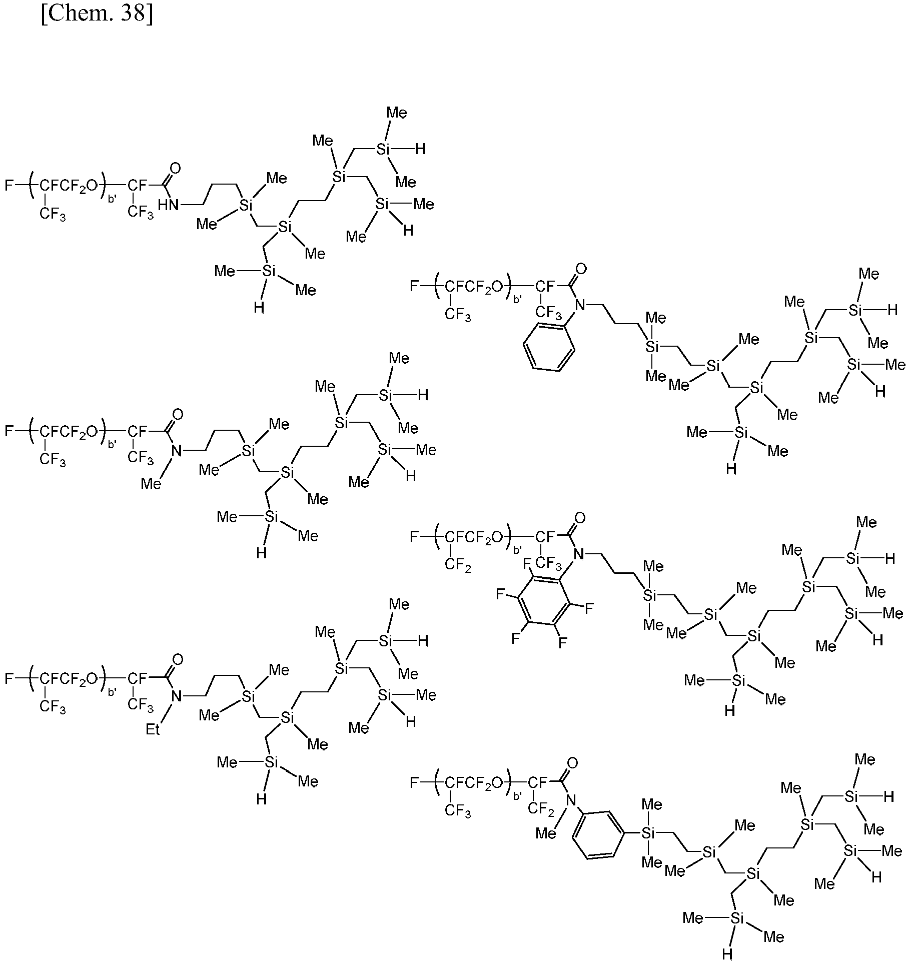 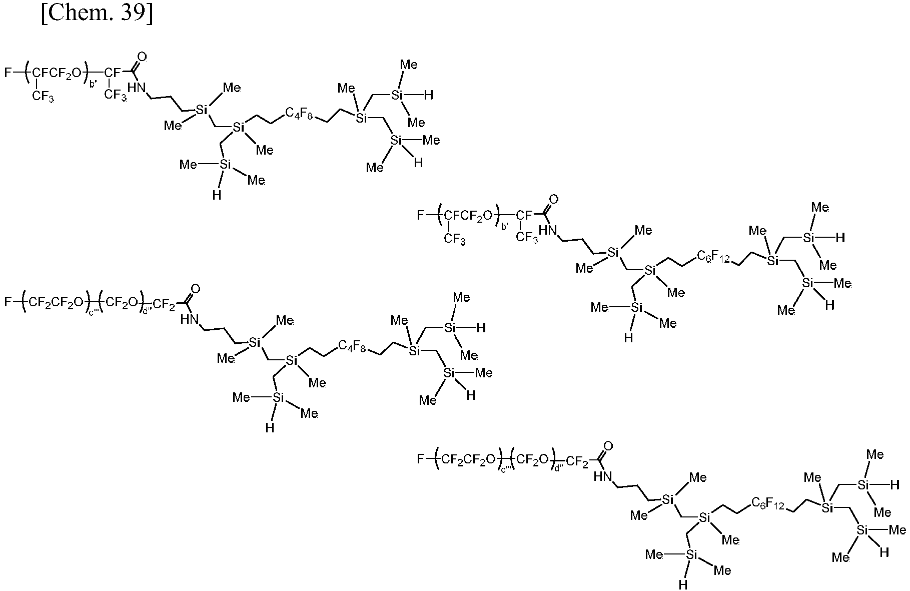 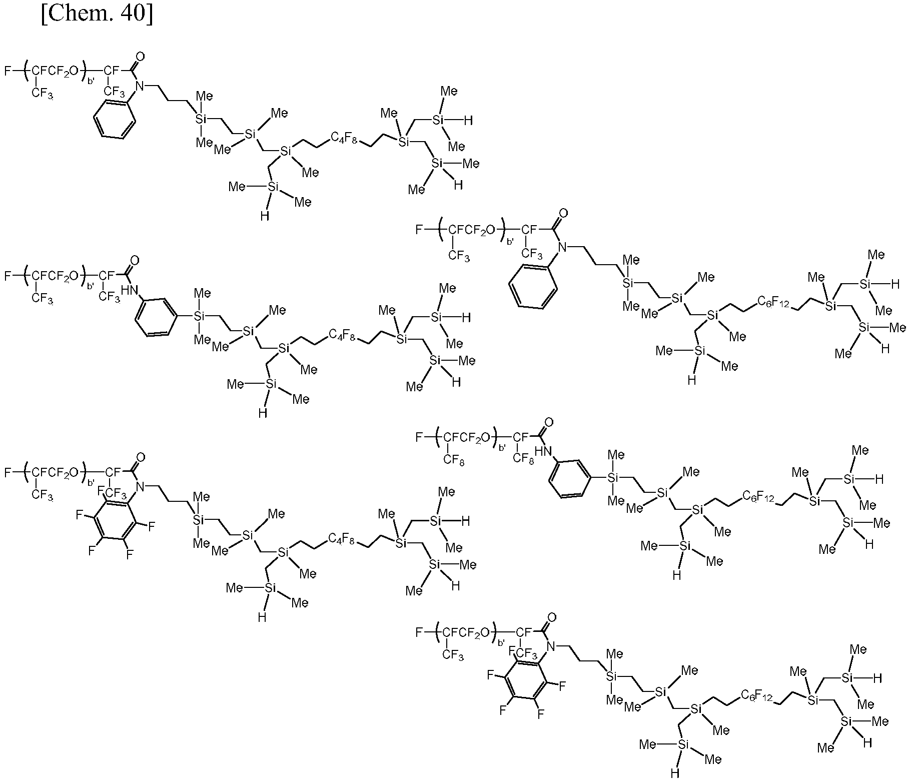 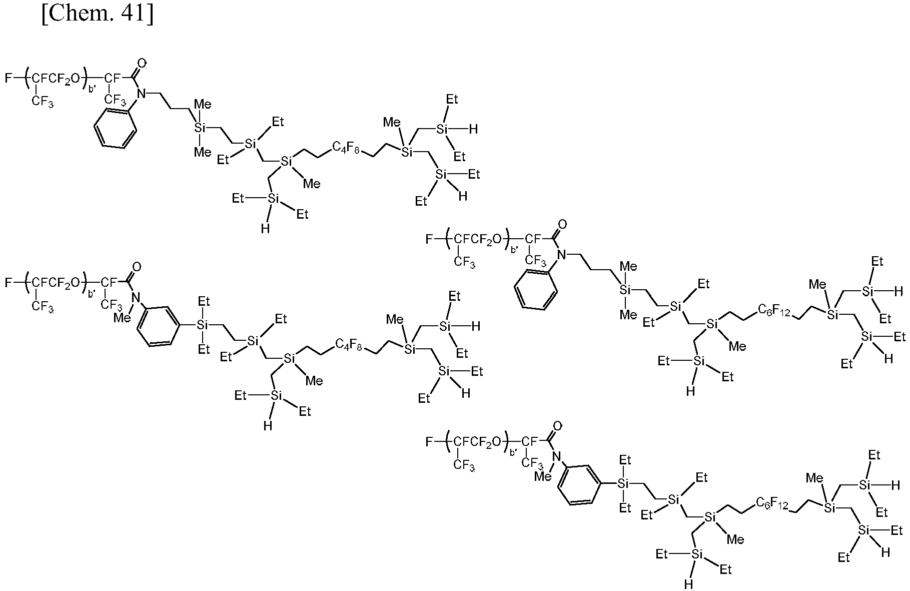 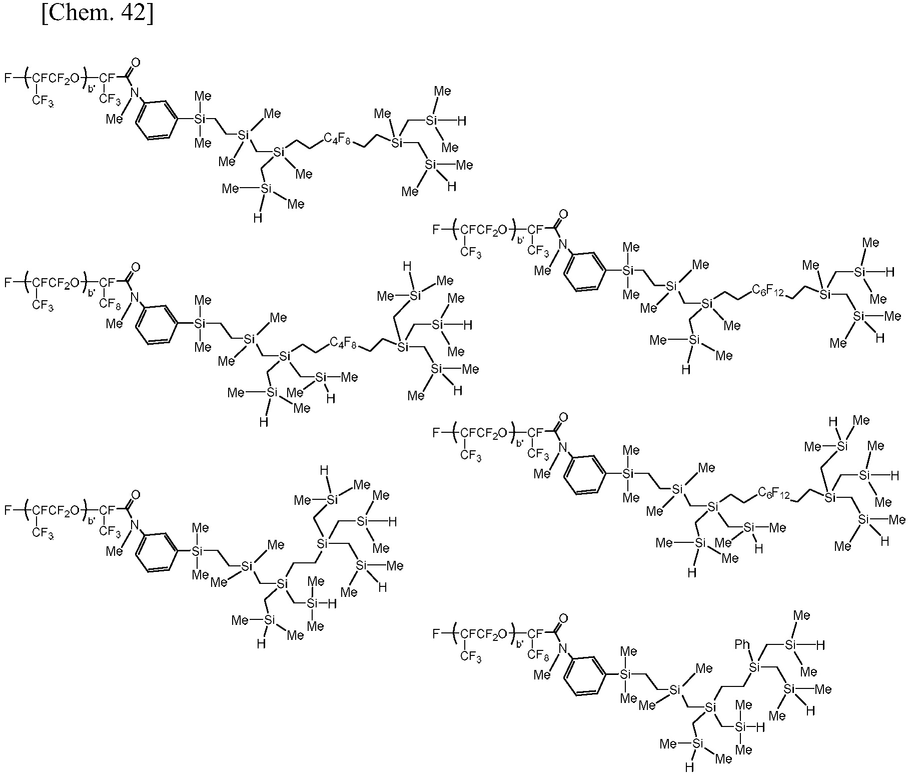 (wherein b' is an integer of 2 to 100, c"' and d" are each an integer of 1 to 99, c'" + d" is an integer of 2 to 100, Me is a methyl group, Et is an ethyl group, Ph is a phenyl group, and repeating units indicated in parentheses with c"' and d" may be randomly bonded).

### [Method for Producing Fluorine-Containing Organohydrogensilane Compound]

A method for producing the fluorine-containing organohydrogensilane compound represented by general formula (1) above as the component (B) preferably includes a step of introducing two or more diorganohydrosilyl groups into a fluorine-containing compound in a predetermined linkage structure by a hydrosilylation reaction, for example, using a fluorine-containing compound containing an alkenyl (vinyl) group and represented by the following general formula (1A) and an organohydrogensilane compound having at least three diorganohydrosilyl groups and represented by the following general formula (1B):

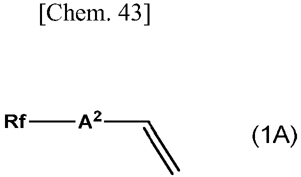

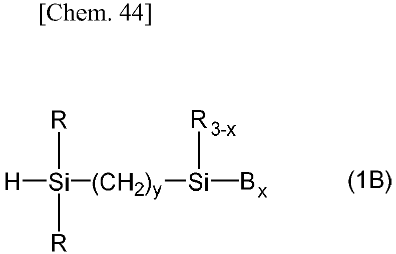

In general formula (1A), A² is a divalent organic group that has 1 to 18 carbon atoms and that may contain at least one selected from an oxygen atom, a nitrogen atom, and a silicon atom. The descriptions of Rf, R, B, y, and x in general formulae (1A) and (1B) above are the same as those of Rf, R, B, y, and x in general formula (1) above. That is, in general formulae (1A) and (1B) above, Rf is a monovalent perfluoropolyether group, each R is independently a monovalent hydrocarbon group having 1 to 6 carbon atoms, x is an integer of 1 to 3, each B is independently a monovalent organic group that has one or more diorganohydrosilyl groups and that forms a silalkylene structure with a silicon atom coupled thereto, or when x is 1, B has two or more diorganohydrosilyl groups, and y is 1 or 2.

A² is a divalent organic group (preferably a hydrocarbon group) that has 1 to 18 carbon atoms and that may contain at least one selected from an oxygen atom, a nitrogen atom, and a silicon atom. Examples of A² include an alkylene group having 1 to 10 carbon atoms, an alkylene group having 1 to 10 carbon atoms and containing an arylene group having 6 to 8 carbon atoms (for example, an alkylene-arylene group having 6 to 18 carbon atoms), a divalent group in which a diorganosilylene group is bonded to an alkylene group having 1 to 10 carbon atoms, a divalent group in which a diorganosilylene group is bonded to an arylene group having 6 to 8 carbon atoms, a divalent group in which an alkylene group having 1 to 10 carbon atoms is coupled to an alkylene group having 1 to 8 carbon atoms with a diorganosilylene group provided therebetween, a divalent group in which an alkylene group having 1 to 8 carbon atoms is coupled to an arylene group having 6 to 8 carbon atoms with a diorganosilylene group provided therebetween, and a divalent group in which any of these groups further has at least one selected from an oxygen atom of an ether bond, a secondary amino group (imino group), a tertiary amino group (substituted imino group), and an amide bond. Among these, A² is preferably a divalent group containing, in its molecular chain, at least one selected from an oxygen atom of an ether bond, a secondary amino group (imino group), a tertiary amino group (substituted imino group), and an amide bond.

Specifically, A² is preferably a group represented by any of the following general formulae: 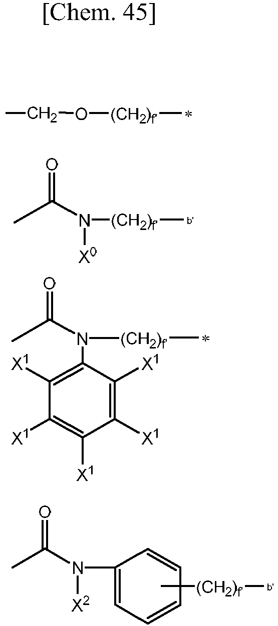 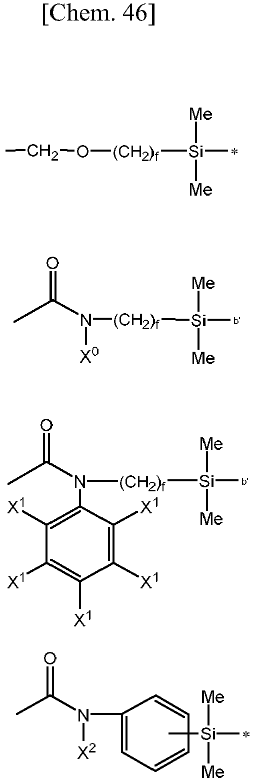 (wherein X⁰, X¹, X², and f are as defined above and the descriptions thereof are the same as those of X⁰, X¹, X², and f in formula (1) above, f' is an integer of 0 to 4, bonds marked with * are each attached to the vinyl group in general formula (1A) above, and unmarked bonds are each attached to Rf).

Examples of the structures of A² represented by the above general formulae include the following structures: 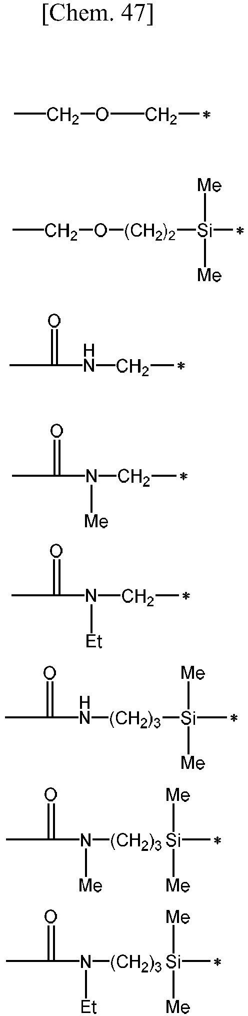 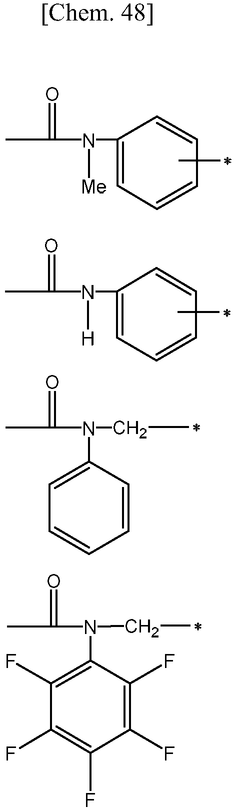 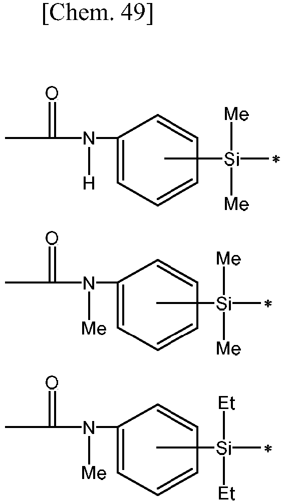 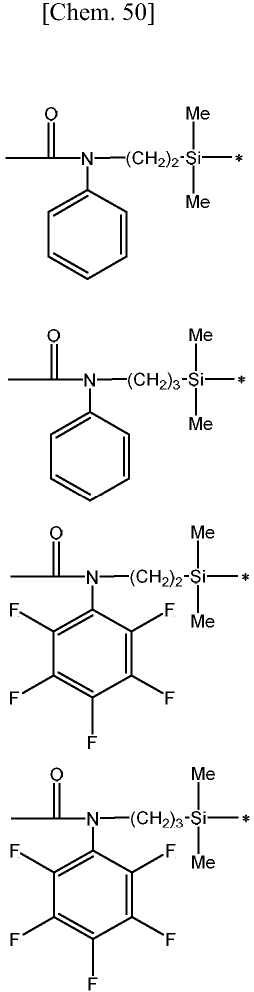 (wherein Me is a methyl group, Et is an ethyl group, bonds marked with * are each attached to the vinyl group in general formula (1A) above, and unmarked bonds are each attached to Rf).

The production scheme (reaction formula) of a preferred method for producing the fluorine-containing organohydrogensilane compound is presented below:

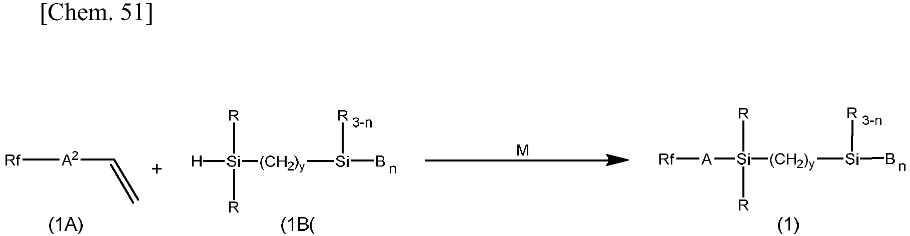

The descriptions of Rf, A, R, B, y, and x in the reaction formula presented in the above scheme are the same as the descriptions of Rf, A, R, B, y, and x in general formula (1) above. The description of A² is the same as the description of A² in general formula (1A) above. M is a metal catalyst.

In the above scheme, the fluorine-containing compound having an alkenyl group (preferably a vinyl group or an allyl group) at an end of the molecular chain represented by general formula (1A) above and the organohydrogensilane compound having at least three diorganohydrosilyl groups in its molecule represented by general formula (1B) above are subjected to a hydrosilylation reaction in the presence of a metal catalyst (M) to produce the fluorine-containing organohydrogensilane compound represented by general formula (1) above.

In the above reaction, for example, the following compounds can be used as the fluorine-containing compound having an alkenyl group (preferably a vinyl group or an allyl group) at an end of the molecular chain represented by general formula (1A) above: 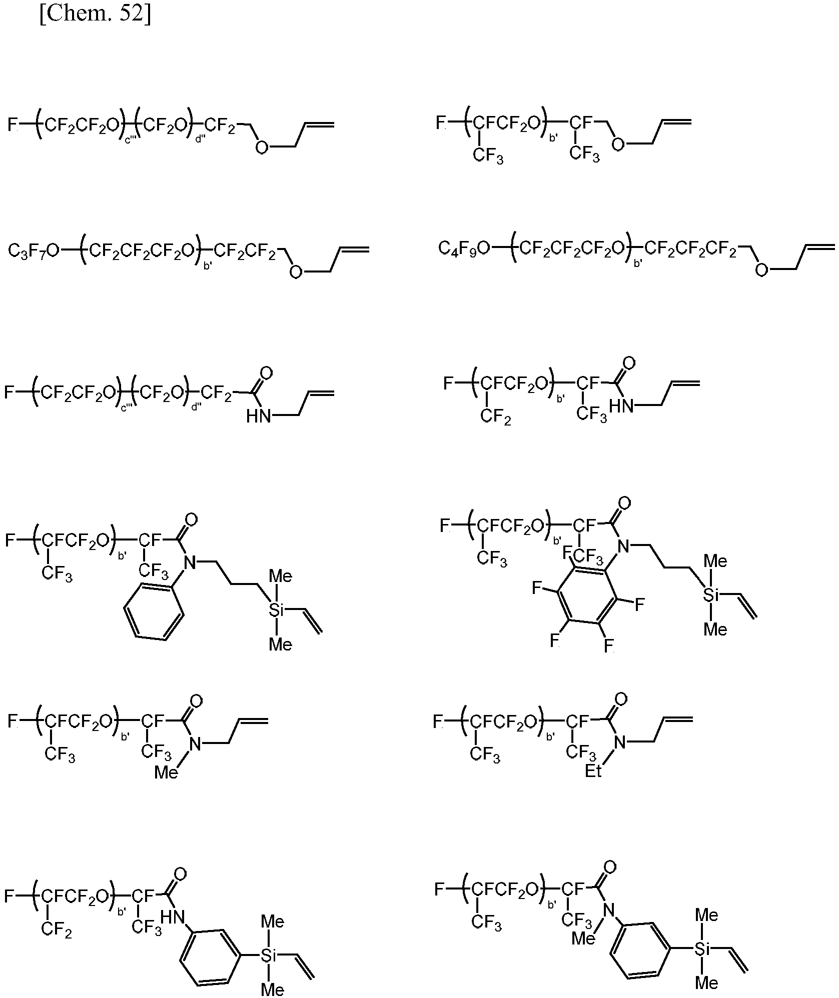 (wherein b' is an integer of 2 to 100, c"' and d" are each an integer of 1 to 99, c'" + d" is an integer of 2 to 100, Me is a methyl group, Et is an ethyl group, and repeating units indicated in parentheses with c"' and d" may be randomly bonded).

For example, the following compounds can be used as the organohydrogensilane compound having at least three diorganohydrosilyl groups in its molecule represented by general formula (1B) above: 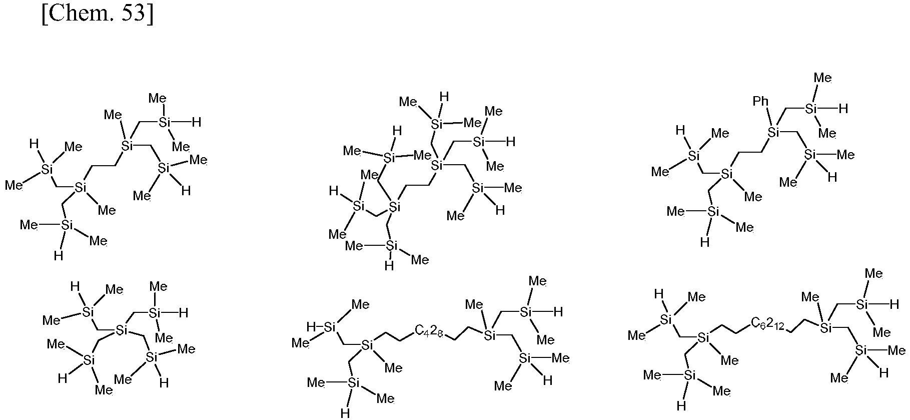 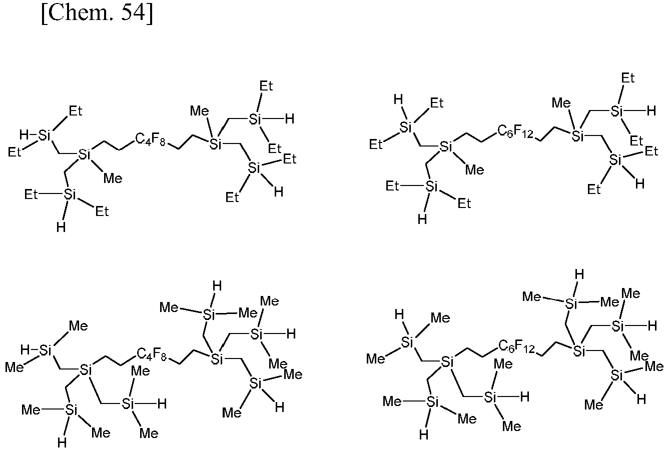 (wherein Me is a methyl group, Et is an ethyl group, and Ph is a phenyl group).

The fluorine-containing compound having an alkenyl group (preferably a vinyl group or an allyl group) at an end of the molecular chain represented by general formula (1A) above is used in an amount such that the amount of alkenyl groups in the fluorine-containing compound is 0.16 to 0.30 equivalents, preferably 0.20 to 0.25 equivalents, based on the amount of hydrosilyl groups in the compound represented by general formula (1B) above. If the amount of alkenyl groups in the fluorine-containing compound is less than 0.16 equivalents based on the amount of hydrosilyl groups in the compound represented by general formula (1B) above, clouding or an increase in viscosity may occur when the resulting fluorine-containing organohydrogensilane compound is added to a fluoropolyether-based curable composition, or the surface of a cured product obtained by heat curing may be dotted with uncured portions, which is not preferred. If the amount of alkenyl groups in the fluorine-containing compound is more than 0.30 equivalents based on the amount of hydrosilyl groups in the compound represented by general formula (1A) above, the amount of hydrosilyl groups in the resulting fluorine-containing organohydrogensilane compound is too small, and the fluoropolyether-based curable composition is less likely to be cured, which is not preferred.

In addition, the addition of M (metal catalyst) in the above reaction scheme allows hydrosilylation to proceed rapidly. M is not particularly limited as long as M is a metal catalyst capable of serving as a catalyst for hydrosilylation. A compound containing a metal atom, such as platinum, rhodium, ruthenium, or palladium, can be suitably used. Examples thereof include chloroplatinic acid, a complex of chloroplatinic acid with an olefin such as ethylene, a complex of chloroplatinic acid with an alcohol or vinylsiloxane, metallic platinum supported on silica, alumina, carbon, or the like, RhCl(PPh₃)₃, RhCl(CO)(PPh₃)₂, Ru₃(CO)₁₂, IrCl(CO)(PPh₃)₂, and Pd(PPh₃)₄. In these formulae, Ph is a phenyl group. Among these, a platinum compound is particularly preferred.

When these catalysts are solid catalysts, they can be used in solid form. To allow the reaction to proceed more quickly, a solution of the above metal catalyst in an appropriate solvent is preferably used. The solution, when added, is preferably added dropwise after it is determined that the system in which the fluorine-containing compound having an alkenyl group (preferably a vinyl group or an allyl group) at an end of the molecular chain represented by general formula (1A) above and the organohydrogensilane compound having at least three diorganohydrosilyl groups in its molecule represented by general formula (1B) above are both contained has been heated to a predetermined temperature. The predetermined temperature is preferably 50°C or higher, more preferably 65°C or higher.

For example, when the fluorine-containing compound having an alkenyl group (preferably a vinyl group or an allyl group) at an end of the molecular chain represented by general formula (1A) above or the organohydrogensilane compound having at least three diorganohydrosilyl groups in its molecule represented by general formula (1B) above is solid, or when these compounds are not soluble in each other, they may be dissolved in a small amount of organic solvent, and then M (metal catalyst) may be added. Examples of the solvent that can be used include benzene, toluene, xylene, and 1,3-bistrifluoromethylbenzene. Preferably, 1,3-bistrifluoromethylbenzene is used.

The amount of hydrosilyl groups in the fluorine-containing organohydrogensilane compound used as the component (B) is preferably 0.05 to 0.35 mol/100 g, more preferably 0.06 to 0.30 mol/100 g. In the present invention, the amount of hydrosilyl groups can be measured by ¹H-NMR (the same applies to the Examples).

The amount of the component (B) added is such that the amount of hydrogen atoms bonded to silicon atoms (hydrosilyl groups, i.e., Si-H groups) in the component (B) is 0.1 to 2.5 mol, preferably 0.2 to 2 mol per 1 mol of alkenyl groups, such as vinyl groups or allyl groups, in the component (A). When the amount of hydrosilyl groups is too small, a cured product cannot be obtained because of an insufficient degree of crosslinking. When the amount of hydrosilyl groups is too large, foaming occurs during curing.

In the method for producing the fluorine-containing organohydrogensilane compound as the component (B), the target product may be isolated after completion of the reaction. A mixture containing unreacted components and by-products can also be used after the removal of the addition reaction catalyst as long as such components do not impair the characteristics of the present invention. In either case, it is sufficient that hydrosilyl groups, that is, Si-H groups, be present in an amount of 0.1 to 2.5 mol, preferably 0.2 to 2 mol per 1 mol of alkenyl groups, such as vinyl groups or allyl groups, in the component (A).

As the component (B), these fluorine-containing organohydrogensilane compounds may be used alone or in a combination of two or more thereof.

### [Component (C)]

The component (C) used in the fluoropolyether-based curable composition of the present invention is a platinum group metal-based catalyst. This is a hydrosilylation reaction catalyst that promotes an addition reaction between alkenyl groups in the component (A) and hydrosilyl groups contained in the component (B) and an adhesion improver and an adhesion promoter, described later, which are optional components. This hydrosilylation reaction catalyst is typically a compound of a noble metal, which is expensive; therefore, platinum or a platinum compound, which is relatively easily available, is often used.

Examples of the platinum compound include chloroplatinic acid, a complex of chloroplatinic acid with an olefin such as ethylene, a complex of chloroplatinic acid with an alcohol or vinylsiloxane, and metallic platinum supported on silica, alumina, carbon, or the like. As platinum group metal-based catalysts other than platinum compounds, rhodium-, ruthenium-, iridium-, and palladium-based compounds are also known, and examples thereof include RhCl(PPh₃)₃, RhCl(CO)(PPh₃)₂, Ru₃(CO)₁₂, IrCl(CO)(PPh₃)₂, and Pd(PPh₃)₄. In these formulae, Ph is a phenyl group.

When these catalysts are solid catalysts, they can be used in solid form. To obtain a more uniform cured product, a solution of chloroplatinic acid or a complex thereof in an appropriate solvent and the perfluoropolyether compound used as the component (A) are preferably dissolved in each other before use.

The amount of the component (C) used may be a catalytic amount. For example, the component (C) is preferably added in an amount of 0.1 to 1,000 ppm (in terms of the weight of platinum group metal atoms), more preferably 1 to 500 ppm, with respect to the component (A). As the component (C), one material may be used alone, or two or more materials may be used in combination.

### [Other Components]

In addition to the components (A) to (C), various additives such as an adhesion improver (adhesion-imparting agent), a plasticizer, a viscosity modifier, a flexibility-imparting agent, a hydrosilylation reaction catalyst control agent, an inorganic filler, an adhesion promoter, and a silane coupling agent can be added as necessary to enhance the practicability of the fluoropolyether-based curable composition of the present invention. These additives may be added in any amount as long as they do not impair the object of the present invention and do not impair the properties of the composition or the physical properties of the cured product.

The adhesion improver, when added, serves as an adhesion improver for imparting self-adhesion to the fluoropolyether-based curable composition of the present invention. The adhesion improver is an organohydrogenpolysiloxane compound having, in one molecule, one or more hydrogen atoms bonded to silicon atoms (Si-H groups) and one or more epoxy groups and/or trialkoxysilyl groups bonded to silicon atoms via a carbon atom or a carbon atom and an oxygen atom. Because the adhesion improver has a molecular structure corresponding to a fluorine-containing organohydrogensiloxane, it is difficult to maintain self-adhesion using the adhesion improver over a long period of time, for example, against hydrofluoric acid and electrolyte solutions for lithium-ion secondary batteries; however, the adhesion improver is extremely effective when initial self-adhesion is required, for example, in the process of producing an article including a cured product obtained from the fluoropolyether-based curable composition of the present invention.

More preferably, the adhesion improver further has, in one molecule, one or more perfluoroalkyl groups or monovalent perfluoropolyether groups (perfluorooxyalkyl groups) bonded to silicon atoms via a divalent linking group containing at least one selected from an oxygen atom, a nitrogen atom, a carbon atom, and a silicon atom, particularly those bonded to silicon atoms via a divalent linking group containing a nitrogen atom and a carbon atom or bonded to silicon atoms via a divalent linking group containing a nitrogen atom, a carbon atom, and an oxygen atom. Examples of the perfluoroalkyl groups include groups represented by CⱼF₂ⱼ₊₁- (wherein j is an integer of 1 to 10, preferably an integer of 3 to 7). In addition, examples of the monovalent perfluoropolyether groups include those similar to the groups listed above as examples of Rf in formula (1) of the component (B). In addition, as the divalent linking group via which the perfluoroalkyl groups or the monovalent perfluoropolyether groups are linked to silicon atoms, a divalent organic group (preferably a hydrocarbon group) that has 1 to 20 carbon atoms and that may contain at least one selected from an oxygen atom, a nitrogen atom, and a silicon atom can be used.

The siloxane skeleton of the organohydrogenpolysiloxane compound used as the adhesion improver may be, for example, cyclic, linear, branched, or a mixture of two or more thereof, preferably cyclic. The organohydrogenpolysiloxane compound used as the adhesion improver may be a compound represented by any of the following general formulae. 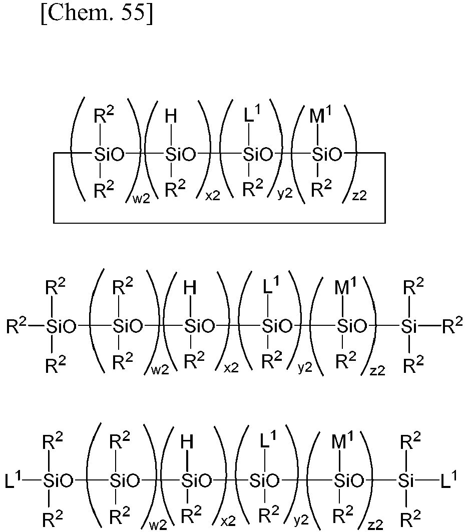 (wherein R² is an unsubstituted or halogen-substituted monovalent hydrocarbon group, L¹ is a monovalent perfluoropolyether group bonded to a silicon atom via a divalent linking group, M¹ is an epoxy group or trialkoxysilyl group, shown below, bonded to a silicon atom via a carbon atom or a carbon atom and an oxygen atom, w2 is preferably an integer satisfying 0 ≤ w2 ≤ 50, more preferably an integer satisfying 0 ≤ w2 ≤ 20, x2 is preferably an integer satisfying 1 ≤ x2 ≤ 50, more preferably an integer satisfying 1 ≤ x2 ≤ 20, y2 is preferably an integer satisfying 0 ≤ y2 ≤ 50, more preferably an integer satisfying 1 ≤ y2 ≤ 20, z2 is preferably an integer satisfying 1 ≤ z2 ≤ 50, more preferably an integer satisfying 1 ≤ z2 ≤ 20, and repeating units indicated in parentheses may be randomly bonded).

The unsubstituted or halogen-substituted monovalent hydrocarbon group for R² above is preferably a group that has 1 to 10 carbon atoms, more preferably 1 to 8 carbon atoms, and that contains no aliphatic unsaturated bond. Specific examples thereof include alkyl groups such as a methyl group, an ethyl group, a propyl group, a butyl group, a hexyl group, a cyclohexyl group, and an octyl group; aryl groups such as a phenyl group and a tolyl group; aralkyl groups such as a benzyl group and a phenylethyl group; and substituted monovalent hydrocarbon groups in which some or all of the hydrogen atoms of these groups are substituted with halogen atoms such as fluorine atoms. Among these, a methyl group is particularly preferred.

L¹ above is a monovalent perfluoropolyether group bonded to a silicon atom via a divalent linking group and is preferably a group represented by the following general formula:

-Z-Rf²

[wherein Rf² is a monovalent perfluoropolyether group and is the same as Rf in general formula (1) above, examples thereof including those similar to the groups listed as examples of Rf, and Z is a divalent organic group (preferably a hydrocarbon group) that has 1 to 20 carbon atoms and that may contain at least one selected from an oxygen atom, a nitrogen atom, and a silicon atom].

Examples of Z include -CH₂-*, -CH₂CH₂CH₂-*, -OCH₂-*, -CH₂OCH₂-*, -(CH₂)₂OCH₂-*, -(CH₂)₃OCH₂-*, -CH₂-NH-CO-*, -(CH₂)₃-NH-CO-*, -(CH₂)₃-N(Me)-CO-*, -(CH₂)₃-N(Et)-CO-*, -(CH₂)₃-N(CH(Me)₂)-CO-*, -CH₂-N(Ph)-CO-*, -(CH₂)₃-O-CO-*, -CH₂OCH₂CH₂CH₂-Si(Me)₂-O-Si(Me)₂-(CH₂)₂-*,-CO-N(Me)-Ph'-Si(Me)₂-(CH₂)₂-*, -CO-N(CH₂)-Ph'-Si(CH₂)₂-(CH₂)₂-Si(CH₂)₂-O-Si(CH₂)₂-(CH₂)₂-*, -CO-NH-Ph'-[Si(Me)₂-(CH₂)_{2]3}-CH₂-*, -CO-N(Me)-Ph'-[Si(Me)₂-(CH₂)₂]₃-*, and groups represented by the following formulae. Among these, -(CH₂)₃OCH₂-*, -(CH₂)₃-NH-CO-*, and the groups represented by the following formulae are preferred. Me represents a methyl group, Et represents an ethyl group, Ph represents a phenyl group, and Ph' represents a phenylene group. In addition, bonds marked with * are each attached to the monovalent perfluoropolyether group, and unmarked bonds are each attached to a silicon atom in the organohydrogenpolysiloxane.

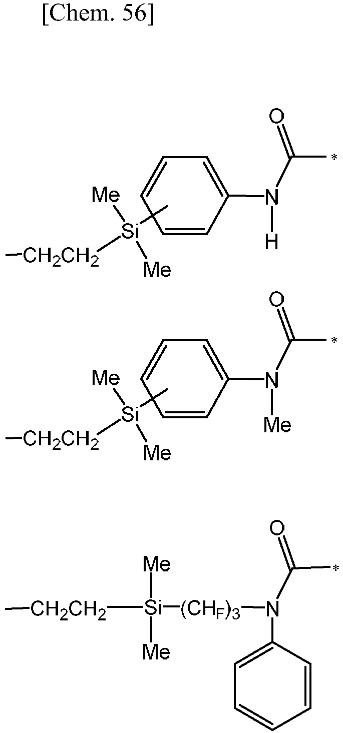

M¹ above represents an epoxy group or trialkoxysilyl group bonded to a silicon atom via a carbon atom or a carbon atom and an oxygen atom, and specific examples thereof include the following group. 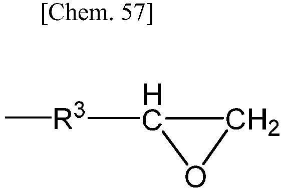 (wherein R³ represents a divalent hydrocarbon group that has 1 to 10 carbon atoms, particularly 1 to 5 carbon atoms, and that may be interrupted by an oxygen atom (an alkylene group such as a methylene group, an ethylene group, or a propylene group, a cycloalkylene group such as a cyclohexylene group, or an oxyalkylene group such as an oxyethylene group, oxypropylene group, or an oxybutylene group, preferably -(CH₂)₃OCH₂-*' (wherein a bond marked with *' is attached to the epoxy group))).

-R⁴-Si(OR⁵)₃

(wherein R⁴ represents a divalent hydrocarbon group that has 1 to 10 carbon atoms, particularly 1 to 4 carbon atoms (for example, an alkylene group such as a methylene group, an ethylene group, or a propylene group), and each R⁵ independently represents a monovalent hydrocarbon group having 1 to 8 carbon atoms, particularly 1 to 4 carbon atoms (for example, an alkyl group such as a methyl group, an ethyl group, a propyl group, or a butyl group)). 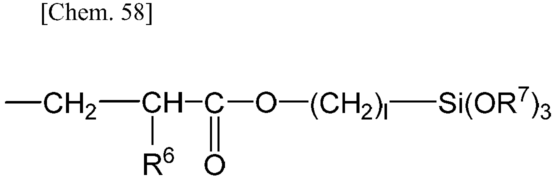 (wherein R⁶ is a hydrogen atom or a methyl group, each R⁷ independently represents a monovalent hydrocarbon group having 1 to 8 carbon atoms, particularly 1 to 4 carbon atoms (for example, an alkyl group such as a methyl group, an ethyl group, a propyl group, or a butyl group), and 1 represents an integer of 2 to 10).

The organohydrogenpolysiloxane compound used as the adhesion improver can be obtained by subjecting, to a partial addition reaction in a usual manner, an organohydrogenpolysiloxane having, in one molecule, three or more hydrogen atoms (Si-H groups) bonded to silicon atoms, a compound containing an aliphatic unsaturated group such as a vinyl group or an allyl group and an epoxy group and/or a trialkoxysilyl group, and optionally a compound containing an aliphatic unsaturated group and a perfluoroalkyl group or a perfluorooxyalkyl group. The number of aliphatic unsaturated groups needs to be smaller than the number of Si-H groups.

In the production of the organohydrogenpolysiloxane compound used as the adhesion improver, the target substance may be isolated after completion of the reaction; however, a mixture obtained simply by removing unreacted components and the addition reaction catalyst can also be used.

Specific examples of the organohydrogenpolysiloxane compound used as the adhesion improver include those represented by the following structural formulae. These compounds may be used alone or in a combination of two or more thereof. In the following formulae, Me represents a methyl group. 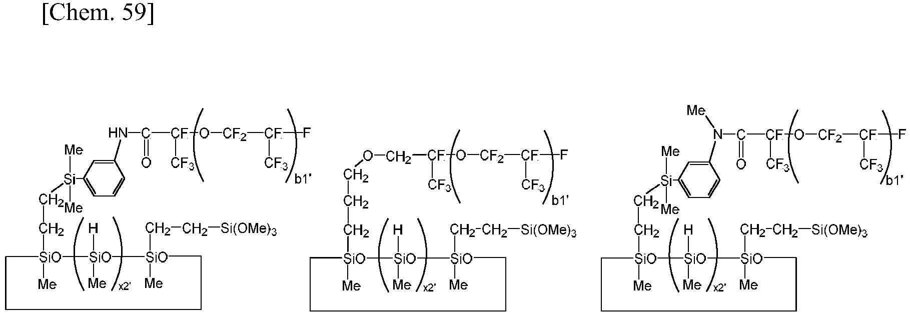 (wherein x2' is 2 or 3, b1' is an integer of 2 to 20, and repeating units indicated in parentheses may be randomly bonded). 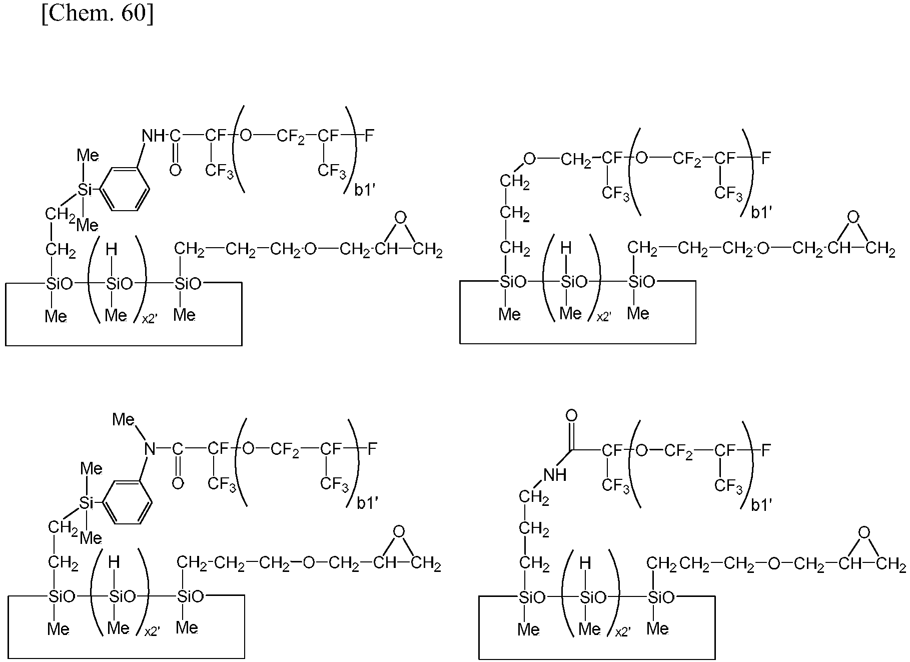 (wherein x2' is 2 or 3, b1' is an integer of 2 to 20, and repeating units indicated in parentheses may be randomly bonded). 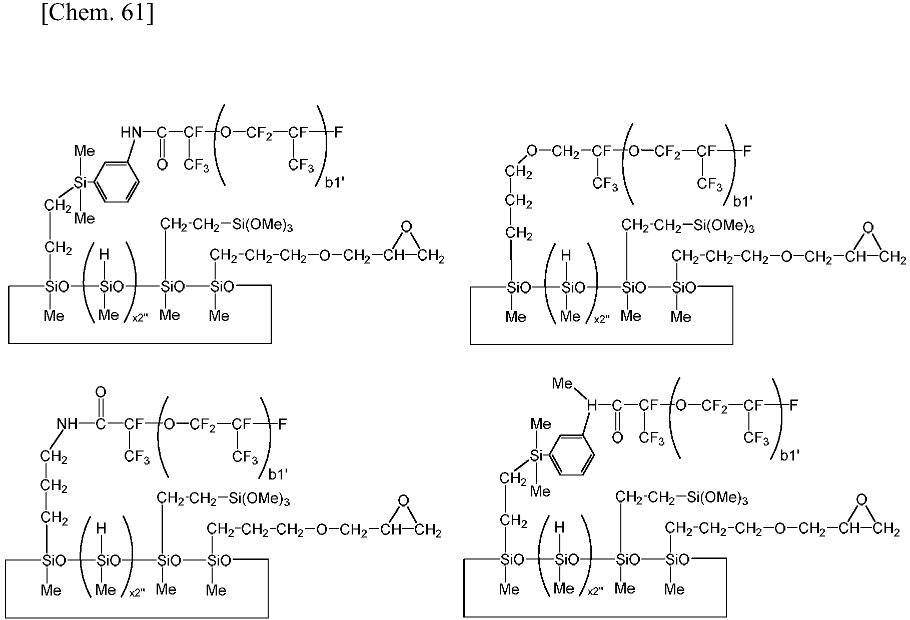 (wherein x2" is 1 or 2, b1' is an integer of 2 to 20, and repeating units indicated in parentheses may be randomly bonded). 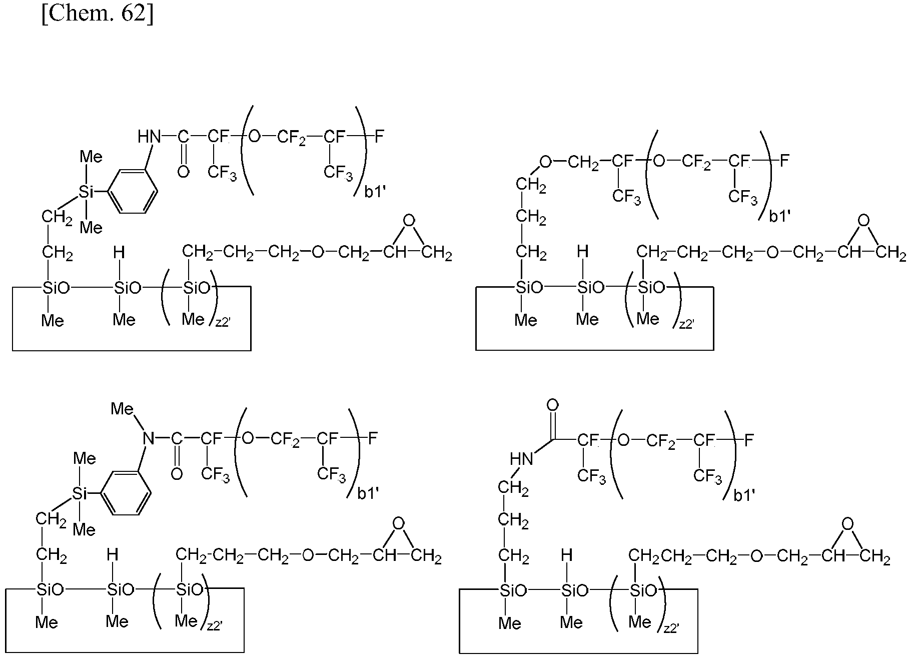 (wherein z2' is 2 or 3, b1' is an integer of 2 to 20, and repeating units indicated in parentheses may be randomly bonded). 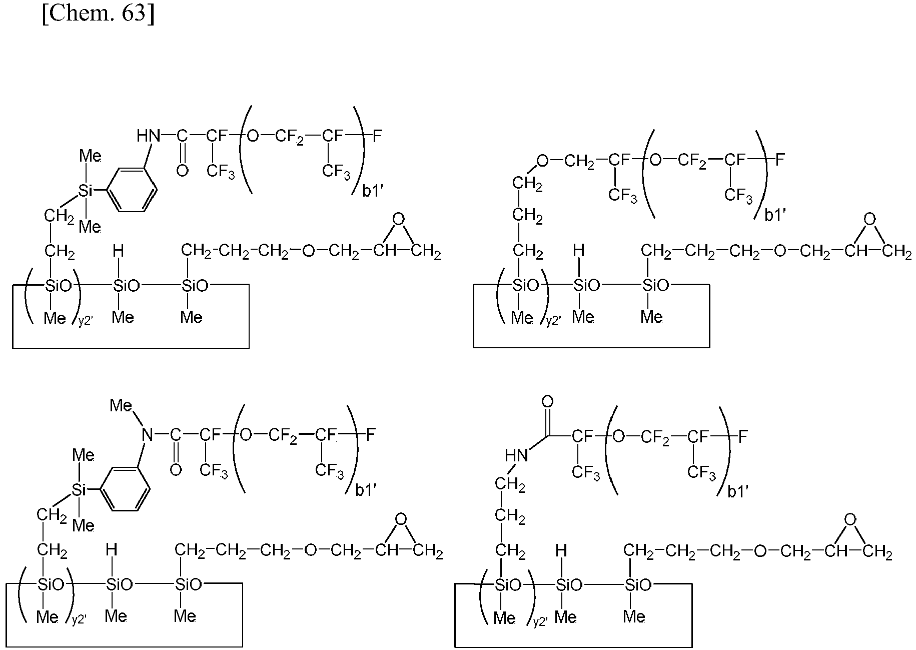 (wherein y2' is 2 or 3, b1' is an integer of 2 to 20, and repeating units indicated in parentheses may be randomly bonded).

The adhesion improver, when added, is preferably added in an amount such that the amount of hydrosilyl groups (Si-H groups) in the adhesion improver is 0.005 to 0.5 mol, more preferably 0.01 to 0.2 mol, still more preferably 0.05 to 0.1 mol per 1 mol of alkenyl groups in the component (A).

As the plasticizer, the viscosity modifier, or the flexibility-imparting agent, a polyfluoromonoalkenyl compound represented by the following general formula (12) and/or a polyfluoro compound represented by the following general formula (13) or (14) can be used.

Rf³-(Z¹)ₚ₂CH=CH₂ (12)

[wherein Z¹ is a divalent organic group (preferably a hydrocarbon group) that has 1 to 20 carbon atoms and that may contain at least one selected from an oxygen atom, a nitrogen atom, and a silicon atom, p2 is 0 or 1, and Rf³ is a monovalent perfluoropolyether group represented by the following general formula: 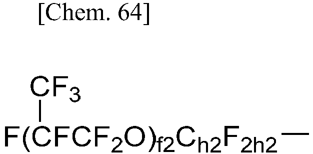 (wherein f2 is an integer of 2 to 200, preferably an integer of 2 to 100, h2 is an integer of 1 to 3, and the molecular weight is smaller than that of Rf¹ in formula (2) of the component (A) used)].

Y¹-O-(CF₂CF₂CF₂O)_{c2}-Y¹ (13)

[wherein each Y¹ is independently a group represented by the formula Cₖ₂F₂ₖ₂₊₁-(wherein k2 is an integer of 1 to 3), c2 is an integer of 1 to 200, and the molecular weight is smaller than that of Rf¹ in formula (2) of the component (A) used].

Y²-O-(CF₂O)_{d2}(CF₂CF₂O)ₑ₂-Y² (14)

(wherein Y² is the same as Y¹ above, d2 and e2 are each an integer of 1 to 200, the molecular weight is smaller than that of Rf¹ in formula (2) of the component (A) used, and repeating units indicated in parentheses may be randomly bonded).

In general formula (12) above, Z¹ is a divalent organic group (preferably a hydrocarbon group) that has 1 to 20 carbon atoms and that may contain at least one selected from an oxygen atom, a nitrogen atom, and a silicon atom, and examples thereof include groups similar to Z (divalent linking group) in the L¹ structure described above and, additionally, the following groups (in the following formulae and the formulae of the examples of Z, bonds marked with * are each attached to Rf³, unmarked bonds are each attached to a carbon atom, and Me represents a methyl group).

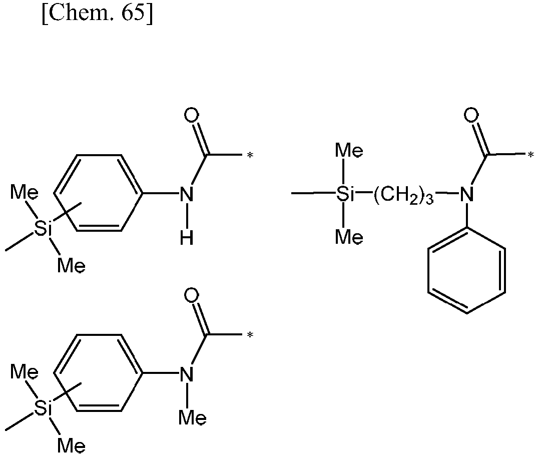

Specific examples of the polyfluoromonoalkenyl compound represented by general formula (12) above include the following groups. In the following formulae, f2 satisfies the above requirements.

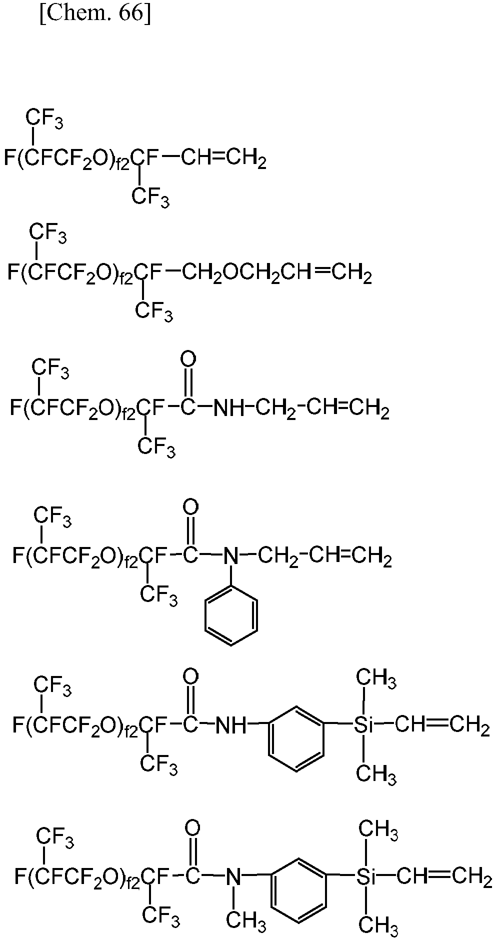

Specific examples of the polyfluoro compounds represented by general formulae (13) and (14) above include the following groups. In the following formulae, c2, d2, e2, and the sum of d2 and e2 satisfy the above requirements.

CF₃O-(CF₂CF₂CF₂O)_{c2}-CF₂CF₃

CF₃-O-(OCF₂)_{d2}(OCF₂CF₂)ₑ₂-CF₃

It is desirable that the polyfluoromonoalkenyl compound of formula (12) above and the polyfluoro compounds of formulae (13) and (14) above have a viscosity (at 23°C) of 2,000 to 50,000 mPa·s.

In addition, the polyfluoromonoalkenyl compound of formula (12) above and the polyfluoro compounds of formulae (13) and (14) above, when added, are preferably added in an amount of 1 to 300 parts by weight, more preferably 50 to 250 parts by weight per 100 parts by weight of the component (A).

Examples of the hydrosilylation reaction catalyst control agent include acetylenic alcohols such as ethynylcyclohexanol (aka: 1-ethynyl-1-hydroxycyclohexane), 3-methyl-1-butyn-3-ol, 3,5-dimethyl-1-hexyn-3-ol, 3-methyl-1-penten-3-ol, and phenylbutynol, reaction products of chlorosilanes having the above monovalent fluorine-containing substituents with acetylenic alcohols, 3-methyl-3-penten-1-yne, 3,5-dimethyl-3-hexen-1-yne, triallyl isocyanurate, polyvinylsiloxane, and organophosphorus compounds, and they can be added to maintain appropriate curing reactivity and storage stability. The control agent may be added in any amount as long as the target curability and storage stability can be imparted.

Examples of the inorganic filler include silica powders such as fumed silica (dry silica), precipitated silica (wet silica), spherical silica (fused silica), sol-gel method silica, and silica aerogel, various surface-treated silica powders obtained by subjecting to hydrophobic treatment the untreated surface of silica powders with various organochlorosilanes, organodisilazanes, cyclic organopolysilazanes, or the like, reinforcing or quasi-reinforcing fillers such as quartz powder, fused quartz powder, diatomaceous earth, and calcium carbonate, inorganic pigments such as titanium oxide, iron oxide, carbon black, and cobalt aluminate, heat resistance improvers such as titanium oxide, iron oxide, carbon black, cerium oxide, cerium hydroxide, zinc carbonate, magnesium carbonate, and manganese carbonate, thermal conductivity-imparting agents such as alumina, boron nitride, silicon carbide, and metal powders, and conductivity-imparting agents such as carbon black, silver powder, and conductive zinc oxide.

The adhesion promoter is intended to improve the adhesion-imparting ability of the adhesion improver when the adhesion improver is contained and promote self-adhesion of the cured product obtained by curing the fluoropolyether-based curable composition of the present invention. In particular, a carboxylic acid anhydride can be suitably used.

The carboxylic acid anhydride may be, for example, a carboxylic acid anhydride that is solid at 23°C. Specific examples thereof include the following compounds. In the following formulae, Me represents a methyl group.

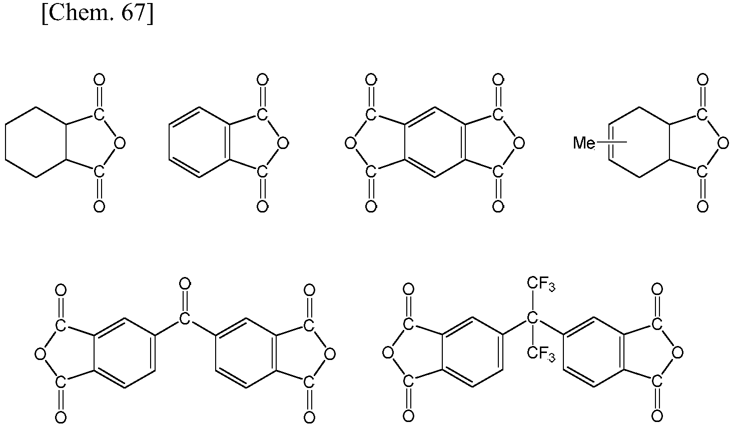

The carboxylic acid anhydride may also be a cyclic organopolysiloxane having, in one molecule, a hydrogen atom bonded to a silicon atom, a perfluoroalkyl group or perfluorooxyalkyl group bonded to a silicon atom via a divalent hydrocarbon group that may contain at least one selected from an oxygen atom, a nitrogen atom, and a silicon atom, and a cyclic carboxylic acid anhydride residue bonded to a silicon atom via a divalent hydrocarbon group (i.e., a fluorine-containing organopolysiloxane-modified carboxylic acid anhydride compound). Examples of such compounds include those represented by the following general formula (15). Because this fluorine-containing organopolysiloxane-modified carboxylic acid anhydride compound has a molecular structure corresponding to a fluorine-containing organohydrogensiloxane, it is difficult to maintain self-adhesion using this compound over a long period of time, for example, against hydrofluoric acid and electrolyte solutions for lithium-ion secondary batteries; however, this compound is extremely effective when initial self-adhesion is required, for example, in the process of producing an article including a cured product obtained from the fluoropolyether-based curable composition of the present invention. 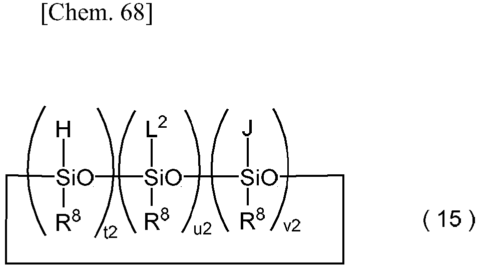 (wherein each L² is independently a monovalent perfluoropolyether group bonded to a silicon atom via a divalent hydrocarbon group, each J is independently a cyclic carboxylic acid anhydride residue bonded to a silicon atom via a divalent hydrocarbon group, each R⁸ is independently an unsubstituted or halogen-substituted monovalent hydrocarbon group, t2 is an integer of 1 to 6, u2 is an integer of 1 to 4, v2 is an integer of 1 to 4, t2 + u2 + v2 is an integer of 4 to 10, and repeating units indicated in parentheses may be randomly bonded).

In formula (15) above, L² is a monovalent perfluoropolyether group bonded to a silicon atom via a divalent hydrocarbon group, and examples thereof include groups similar to L¹ above. These are groups introduced from the viewpoint of compatibility with the component (A), dispersibility, uniformity after curing, and the like.

In addition, in formula (15) above, R⁸ is an unsubstituted or halogen-substituted monovalent hydrocarbon group, and examples thereof include groups similar to R² above. A methyl group and an ethyl group are preferred.

In addition, in formula (15) above, J is a cyclic carboxylic acid anhydride residue bonded to a silicon atom via a divalent hydrocarbon group, and specific examples thereof include groups represented by the following general formula:

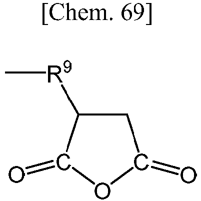

In the formula, R⁹ is a divalent hydrocarbon group having 2 to 15 carbon atoms, and specific examples thereof include an ethylene group, a propylene group, and a butylene group. Among these, a propylene group is preferred.

Furthermore, in formula (15) above, t2 is an integer of 1 to 6, preferably an integer of 2 to 5, u2 is an integer of 1 to 4, preferably an integer of 1 to 3, v2 is an integer of 1 to 4, preferably an integer of 1 to 3, and t2 + u2 + v2 is an integer of 4 to 10, preferably an integer of 4 to 8, provided that ((H)(R⁸)SiO), ((L²)(R⁸)SiO), and ((J)(R⁸)SiO) units are randomly arranged.

Examples of the cyclic organopolysiloxane represented by general formula (15) above include the following compounds. In the following formulae, Me represents a methyl group. 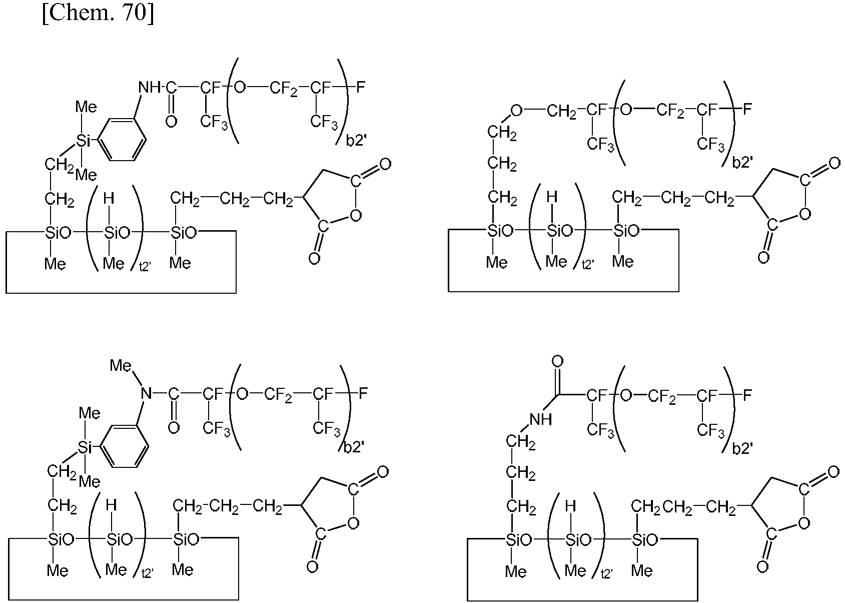 (wherein t2' is 2 or 3, and b2' is an integer of 2 to 20). 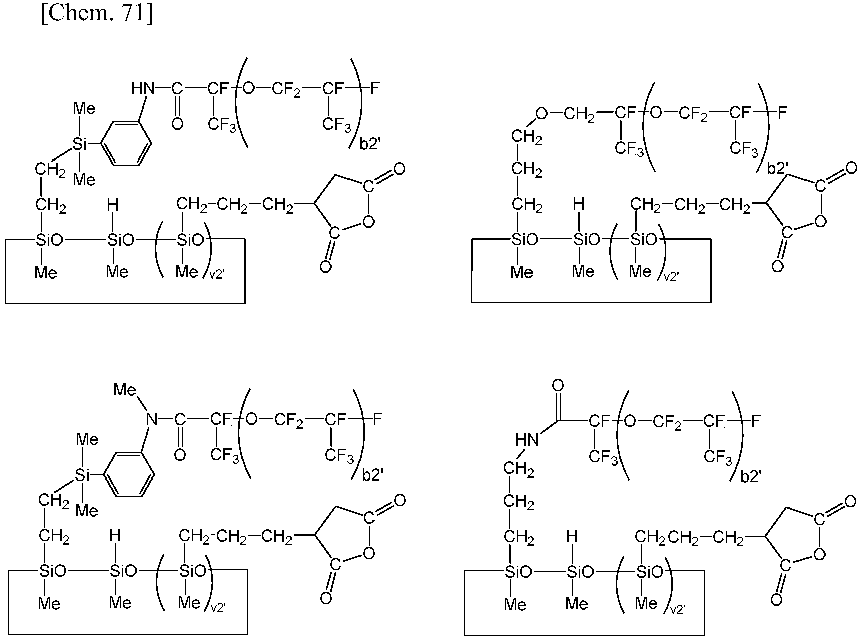 (wherein v2' is 2 or 3, and b2' is an integer of 2 to 20).

These adhesion promoters may be used alone or in a combination of two or more thereof. In this case, the carboxylic acid anhydride that is solid at 23°C and the cyclic organopolysiloxane (fluorine-containing organopolysiloxane-modified carboxylic acid anhydride compound) may be used in combination.

The adhesion promotor, when added, is preferably added in an amount of 0.01 to 2 parts by weight, more preferably 0.05 to 1 part by weight per 100 parts by weight of the component (A). In addition, the amount of hydrosilyl groups (Si-H groups) in the adhesion promotor is preferably 0.005 to 0.5 mol, particularly 0.05 to 0.1 mol per 1 mol of alkenyl groups in the component (A).

The total amount of hydrosilyl groups in the composition (particularly, the total amount of hydrosilyl groups in the component (B), the adhesion improver, and the adhesion promoter) is preferably 0.1 to 2.5 mol, particularly 0.2 to 2 mol per 1 mol of alkenyl groups in the component (A).

### [Method for Producing Fluoropolyether-Based Curable Composition]

The method for producing the fluoropolyether-based curable composition of the present invention is not particularly limited, and the fluoropolyether-based curable composition can be produced by kneading together the above components. Specifically, the fluoropolyether-based curable composition of the present invention can be produced by uniformly mixing together the components (A) to (C) described above and other optional components using a mixing device such as a planetary mixer, a Ross mixer, or a Hobart mixer or, if necessary, a kneading device such as a kneader or a three-roll mill.

The fluoropolyether-based curable composition of the present invention may also be a two-pack composition whose components are mixed together before use.

Although the produced fluoropolyether-based curable composition can be cured at room temperature depending on the type of catalyst used as the component (C), the composition is preferably heated to promote curing. In particular, the fluoropolyether-based curable composition is preferably cured at 60°C or higher, preferably 100°C to 200°C, for several minutes to several hours to achieve good adhesion to various substrates.

When the fluoropolyether-based curable composition of the present invention is used, the composition may be dissolved at a desired concentration in an appropriate fluorinated solvent, for example, 1,3-bis(trifluoromethyl)benzene, Fluorinert (manufactured by 3M), perfluorobutyl methyl ether, perfluorobutyl ethyl ether, or the like depending on the use and purpose thereof, and the solution may be used. In particular, it is preferable to use a solvent in thin-film coating applications.

The fluoropolyether-based curable composition of the present invention is preferably used as an electric/electronic component for automobiles, chemical plants, semiconductor production lines, analytic or physical/chemical instruments, living environments, communication devices, communication equipment, aircraft, railroad cars, portable devices, power storage devices, robots, lithium-ion batteries, or the like.

In particular, an electric/electronic component using a cured product of the fluoropolyether-based curable composition of the present invention as a gasket, packing, a protective seal, or a coating layer is preferred.

### EXAMPLES

The present invention will be specifically described below with reference to Synthesis Examples, Examples, and Comparative Examples, although the present invention is not limited to the following Examples. In the following Examples, Me in the formulae represents a methyl group, and parts represent parts by weight. In addition, the number-average molecular weight was determined as a number-average molecular weight in terms of polystyrene in gel permeation chromatography (GPC) analysis using AK-225 (manufactured by AGC Inc.), which is a fluorinated solvent, as a developing solvent. The viscosity (at 23°C) represents a value measured by a method using a rotational viscometer in accordance with a viscosity test method specified in JIS K 6249.

• Synthesis of Fluorine-Containing Organohydrogensilane Compound

### [Synthesis Example 1]

Into a 1 L flask were placed 150 g of an organohydrogensilane compound represented by the following formula (16): 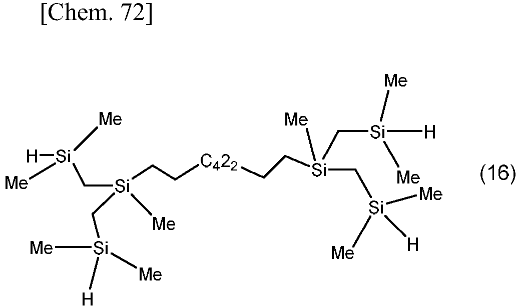 (amount of hydrosilyl groups: 0.616 mol/100 g), 339 g of a compound represented by the following formula (17): 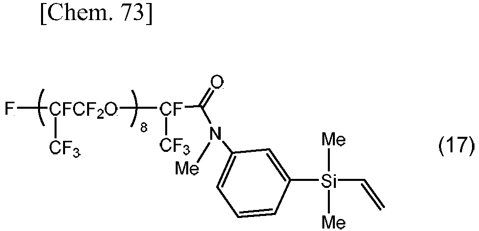 (amount of vinyl groups: 0.0681 mol/100 g), and 91 g of 1,3-bistrifluoromethylbenzene, and the flask was purged with nitrogen.

After the temperature was increased to 70°C, 0.16 g of a solution of (C1) a platinum-divinyltetramethyldisiloxane complex in toluene (platinum concentration: 0.5% by weight) was added dropwise, and the mixture was stirred at 85°C for 1 hour. The reaction solution was quenched and concentrated under reduced pressure. The resulting residue was dissolved in FC-3283 (524 g), and the solution was stirred with 9.10 g of activated carbon (trade name: Shirasagi AS, manufactured by Osaka Gas Chemicals Co., Ltd.) for 1 hour, followed by filtration. Activated carbon (9.10 g) was added to the resulting solution, and the mixture was stirred for 1 hour, followed by filtration.

The main component was extracted from the resulting solution by preparative liquid chromatography and was then concentrated under reduced pressure to give 376 g of a compound represented by the following formula (18): 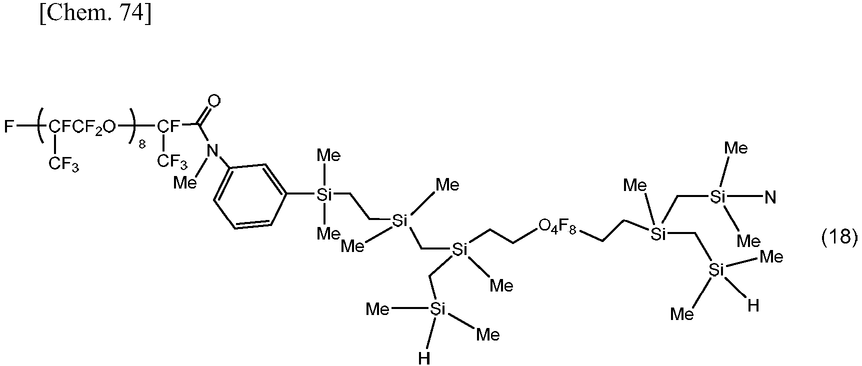 (amount of hydrosilyl groups: 0.143 mol/100 g).

The ¹H-NMR spectrum of the resulting product indicated the following signals: δ 7.86 to 6.55 (m, 4H), 4.38 to 3.64 (m, 3H), 3.15 (s, 3H), 2.46 to 1.48 (br, 4H), and 1.18 to -0.91 (m, 52H). Thus, the formation of the compound represented by formula (18) above was confirmed.

### [Synthesis Example 2]

All operations were performed in the same manner as in Synthesis Example 1, except that 1,012 g of a compound represented by the following formula (19): 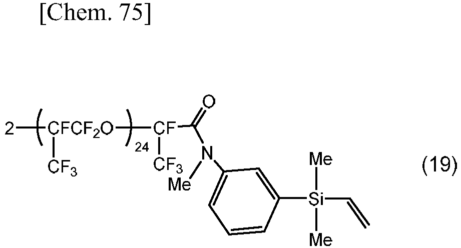 (amount of vinyl groups: 0.0228 mol/100 g) was used instead of the compound represented by formula (17) above.

Thus, 741 g of a compound represented by the following formula (20): 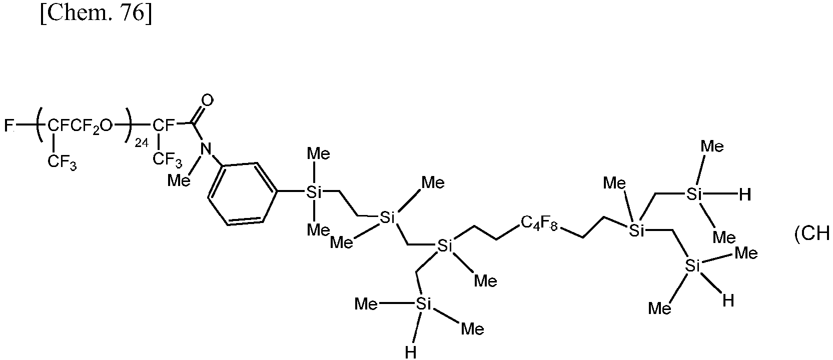 (amount of hydrosilyl groups: 0.0682 mol/100 g) was obtained.

The ¹H-NMR spectrum of the resulting product indicated the following signals: δ 7.68 to 6.36 (m, 4H), 4.21 to 3.44 (s, 3H), 3.03 (s, 3H), 2.29 to 1.41 (br, 4H), and 1.13 to -0.98 (m, 52H). Thus, the formation of the compound represented by formula (20) above was confirmed.

### [Synthesis Example 3]

All operations were performed in the same manner as in Synthesis Example 1, except that 85 g of a compound represented by the following formula (21): 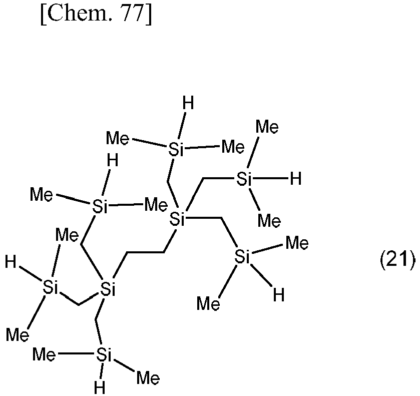 (amount of hydrosilyl groups: 1.09 mol/100 g) was used instead of the compound represented by formula (16) above.

Thus, 323 g of a compound represented by the following formula (22): 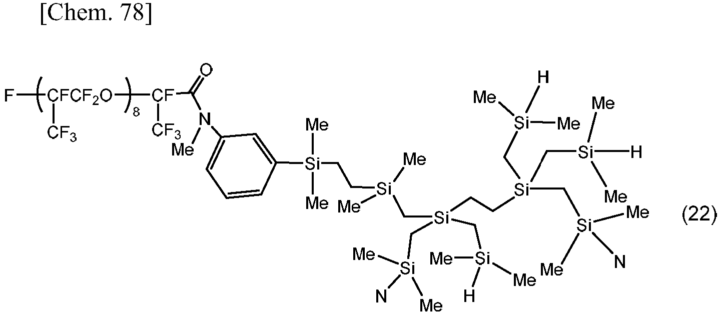 (amount of hydrosilyl groups: 0.247 mol/100 g) was obtained.

The ¹H-NMR spectrum of the resulting product indicated the following signals: δ 7.85 to 6.55 (m, 4H), 4.29 to 3.51 (m, 5H), 3.15 (s, 3H), and 1.23 to -0.91 (m, 62H). Thus, the formation of the compound represented by formula (22) above was confirmed.

### [Synthesis Example 4]

All operations were performed in the same manner as in Synthesis Example 1, except that 264 g of a compound represented by the following formula (23): 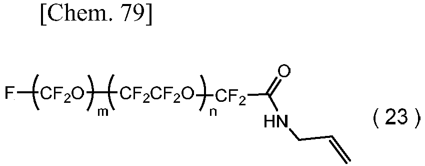 (wherein average of m + n = 12, and m:n = 0.98:1)
(amount of vinyl groups: 0.0873 mol/100 g) was used instead of the compound represented by formula (17) above. Thus, 317 g of a compound represented by the following formula (24): 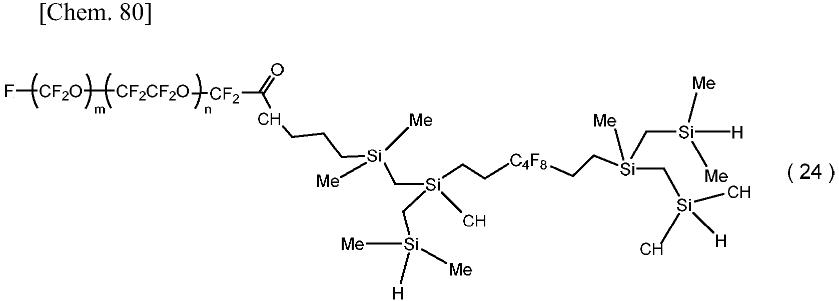 (wherein average of m + n = 12, and m:n = 0.98:1)
(amount of hydrosilyl groups: 0.169 mol/100 g) was obtained. The ¹H-NMR spectrum of the resulting product indicated the following signals: δ 6.89 to 6.61 (s, 1H), 4.39 to 3.66 (m, 3H), 3.41 to 3.07 (m, 2H), 2.46 to 1.47 (br, 4H), 1.74 to 1.39 (m, 2H), and 1.18 to -0.90 (m, 44H). Thus, the formation of the compound represented by formula (24) above was confirmed.

### <Preparation of Fluoropolyether-Based Curable Composition and Determination of Compatibility between Component (B) and Component (A) (Base Oil)>

### [Example 1]

To 100 parts of (A1) a polymer represented by the following formula (25) (number-average molecular weight: 15,550, viscosity: 10,900 mPa·s, amount of vinyl groups: 0.012 mol/100 g) were added 0.1 parts of (C1) a solution of a platinum-divinyltetramethyldisiloxane complex in toluene (platinum concentration: 0.5% by weight), 0.07 parts of a compound represented by the following formula (26), and 9.74 parts of (B1) the compound represented by the following formula (18) (amount of hydrosilyl groups: 0.143 mol/100 g) obtained in Synthesis Example 1, and they were mixed to prepare a curable composition. The curable composition was obtained as a transparent oil. This indicated high compatibility between the component (B1) and the component (A1). 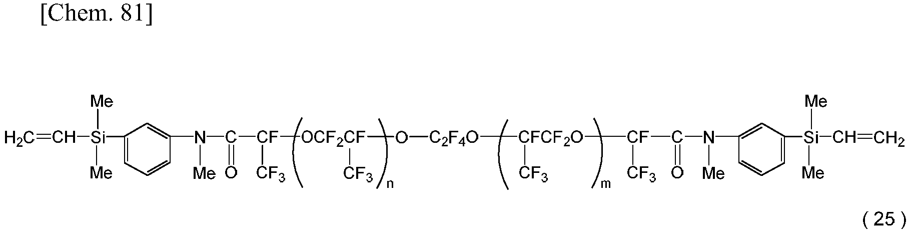 (wherein m and n are each an integer of 1 or more, and the average value of m + n is 90).

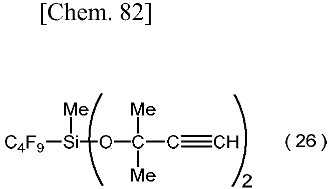

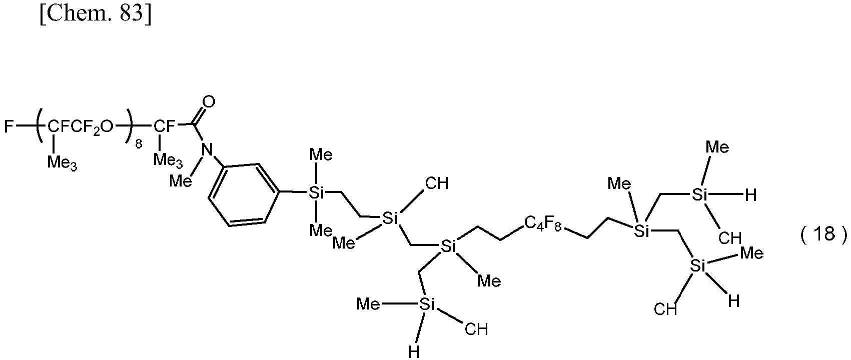

### [Example 2]

A curable composition was prepared in the same manner as in Example 1, except that, in Example 1, 100 parts of (A2) a polymer represented by the following formula (27) (number-average molecular weight: 15,630, viscosity: 11,000 mPa·s, amount of vinyl groups: 0.012 mol/100 g) was used instead of (A1) the polymer represented by formula (25) above. The curable composition was obtained as a transparent oil. This indicated high compatibility between the component (B1) and the component (A2). 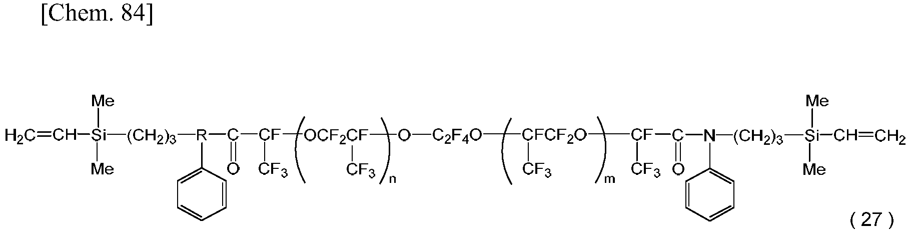 (wherein m and n are each an integer of 1 or more, and the average value of m + n is 90).

### [Example 3]

A curable composition was prepared in the same manner as in Example 1, except that, in Example 1, 100 parts of (A3) a polymer represented by the following formula (28) (number-average molecular weight: 3,350, viscosity: 60 mPa·s, amount of vinyl groups: 0.031 mol/100 g) was used instead of (A1) the polymer represented by formula (25) above, and 25.16 parts of (B1) the compound represented by formula (18) above was used. The curable composition was obtained as a transparent oil. This indicated high compatibility between the component (B1) and the component (A3).
[Chem. 85]

CH₂=CH-CH₂-O-CH₂-CF₂-(OC₂F₄)ₙ-(OCF₂)ₘ-O-CF₂-CH₂-O-CH₂-CH=CH₂ (28)

(wherein m:n = 0.98:1, and average of m + n = 34)

### [Example 4]

A curable composition was prepared in the same manner as in Example 1, except that, in Example 1, 20.42 parts of (B2) the compound represented by the following formula (20) (amount of hydrosilyl groups: 0.0682 mol/100 g) obtained in Synthesis Example 2 was used instead of (B1) the compound represented by formula (18) above. The curable composition was obtained as a transparent oil. This indicated high compatibility between the component (B2) and the component (A1).

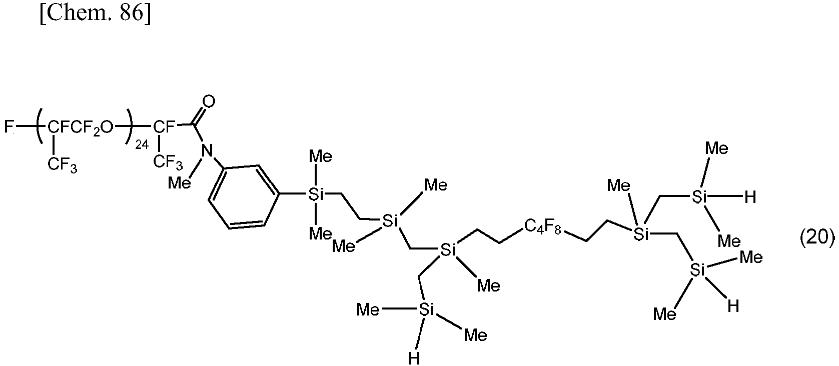

### [Example 5]

A curable composition was prepared in the same manner as in Example 1, except that, in Example 1, 5.73 parts of (B3) the compound represented by the following formula (22) (amount of hydrosilyl groups: 0.247 mol/100 g) obtained in Synthesis Example 3 was used instead of (B1) the compound represented by formula (18) above. The curable composition was obtained as a transparent oil. This indicated high compatibility between the component (B3) and the component (A1).

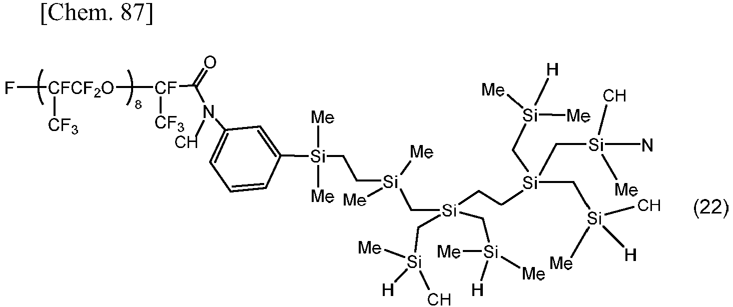

### [Example 6]

A curable composition was prepared in the same manner as in Example 1, except that, in Example 1, 8.24 parts of (B4) the compound represented by the following formula (24) (amount of hydrosilyl groups: 0.169 mol/100 g) obtained in Synthesis Example 4 was used instead of (B1) the compound represented by formula (18) above. The curable composition was obtained as a transparent oil. This indicated high compatibility between the component (B4) and the component (A1). 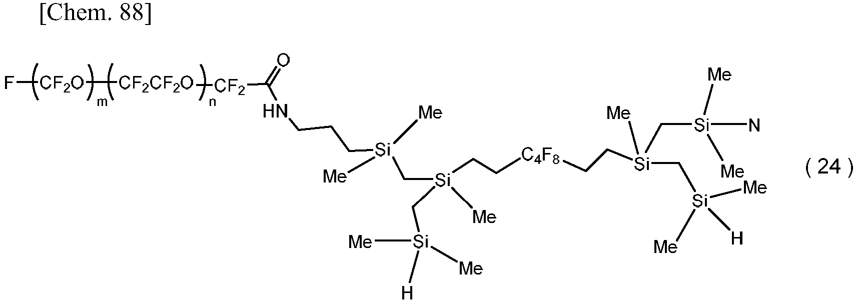 (wherein m:n = 0.98:1, and average of m + n = 12)

### [Example 7]

A curable composition was prepared in the same manner as in Example 1, except that, in Example 1, 9.61 parts of a mixture of (B5) the compound represented by formula (18) above and compounds represented by the following formulae (29), (30), (31), and (32) (weight ratio: (18)/(29)/(30)/(31)/(32) = 80:9:6:1:4, amount of hydrosilyl groups: 0.145 mol/100 g) was used instead of (B1) the compound represented by formula (18) above. The compound represented by formula (18) above was obtained in the same manner as in Synthesis Example 1, except that the solution obtained in Synthesis Example 1 was directly concentrated under reduced pressure without extracting the main component therefrom by preparative liquid chromatography. The curable composition was obtained as a transparent oil. This indicated high compatibility between the component (B5) and the component (A1).

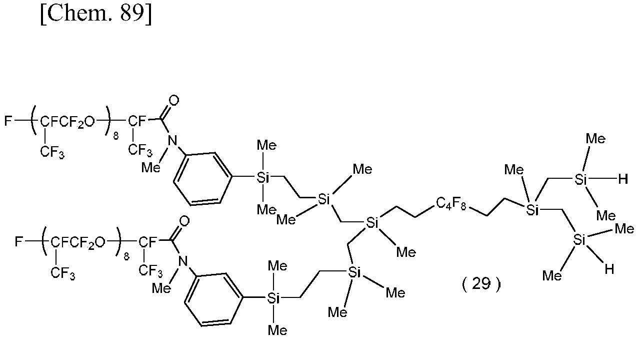

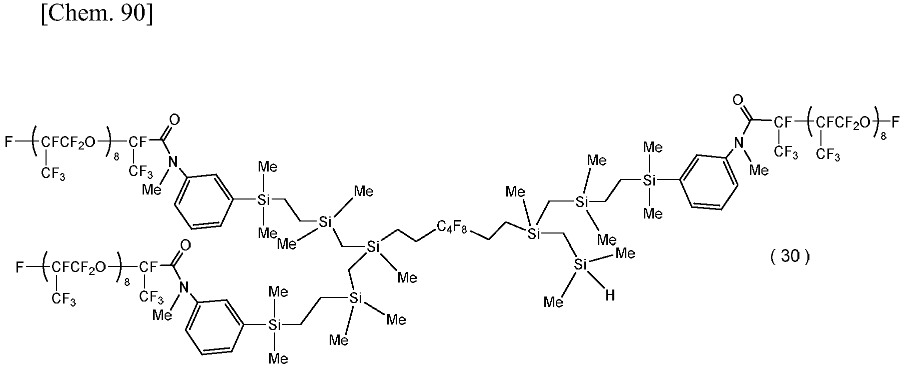

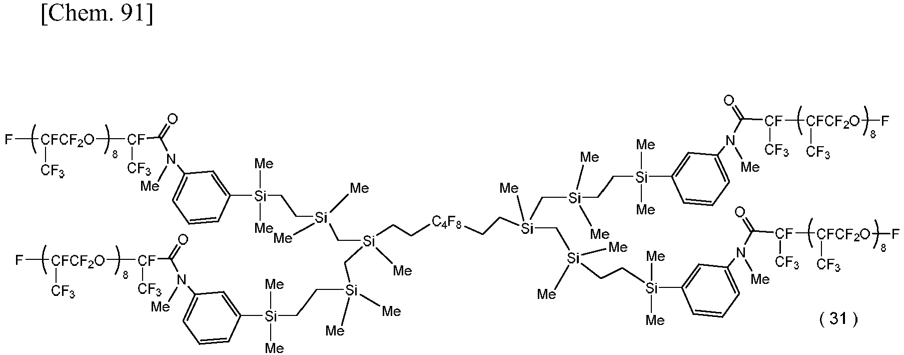

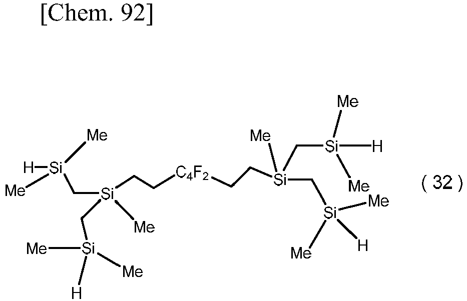

### [Comparative Example 1]

A curable composition was prepared in the same manner as in Example 1, except that, in Example 1, 2.26 parts of (B6) the compound represented by formula (32) above (amount of hydrosilyl groups: 0.616 mol/100 g) was used instead of (B1) the compound represented by formula (18) above. The curable composition was obtained as a cloudy oil. This indicated low compatibility between the component (B6) and the component (A1).

### [Comparative Example 2]

A curable composition was prepared in the same manner as in Example 1, except that, in Example 1, 3.52 parts of (B7) a compound represented by the following formula (33) (compound described in Example 1 of Patent Document 5: JP-A 2002-012769, amount of hydrosilyl groups: 0.408 mol/100 g) was used instead of (B1) the compound represented by formula (18) above. The curable composition was obtained as a slightly cloudy oil. This indicated low compatibility between the component (B7) and the component (A1).

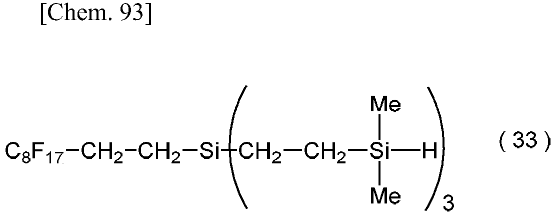

### [Comparative Example 3]

A curable composition was prepared in the same manner as in Example 1, except that, in Example 1, 3.54 parts of (B8) a compound represented by the following formula (34) (amount of hydrosilyl groups: 0.394 mol/100 g) was used instead of (B1) the compound represented by formula (18) above. The curable composition was obtained as a transparent oil. This indicated high compatibility between the component (B8) and the component (A1).

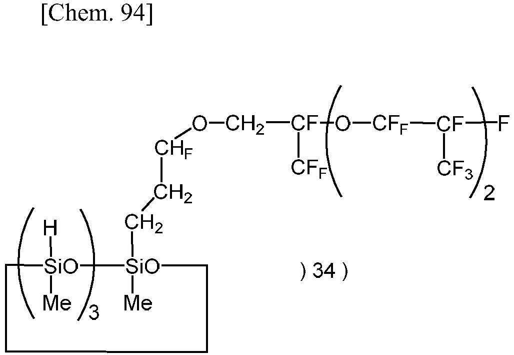

### <Determination of Presence or Absence of Oily Component (Uncured Portions) on Surface of Fluoropolyether-Based Cured Product and Evaluation of Releasability of Cured Product>

Each of the fluoropolyether-based curable compositions prepared in Examples 1 to 7 and Comparative Examples 1 to 3 was poured into a 2 mm thick stainless steel mold placed on a Teflon (registered trademark; the same applies hereinafter) sheet. Another Teflon sheet was placed to sandwich the composition therebetween, and then press curing was performed at 150°C for 10 minutes. After press curing, the 2 mm thick stainless steel mold was removed, and the releasability of the resulting fluoropolyether-based cured product and the presence or absence of residual oily component on the surface of the cured product were evaluated according to the following evaluation criteria. Table 1 presents the results together with the appearance of the fluoropolyether-based curable compositions.

### [Evaluation Criteria]

O: The cured product was easy to peel from the Teflon sheets without damage, and no residual oily component was found on the surface of the peeled cured product.
×: The cured product was difficult to peel from the Teflon sheets without damage, and residual oily component was found on the surface of the peeled cured product.

**[Table 1]**

| | Appearance of fluoropolyether-based curable composition | Presence or absence of oily component and releasability |
|---|---|---|
| Example 1 | Transparent | ○ |
| Example 2 | Transparent | ○ |
| Example 3 | Transparent | ○ |
| Example 4 | Transparent | ○ |
| Example 5 | Transparent | ○ |
| Example 6 | Transparent | ○ |
| Example 7 | Transparent | ○ |
| Comparative Example 1 | Cloudy | × |
| Comparative Example 2 | Slightly cloudy | × |
| Comparative Example 3 | Transparent | ○ |

The surfaces of the fluoropolyether-based cured products obtained from the fluoropolyether-based curable compositions of Examples 1 to 7 and Comparative Example 3 were not found to be dotted with uncured oily component. This is because almost all component (B) and component (A) contained in the fluoropolyether-based curable compositions of Examples 1 to 7 and Comparative Example 3 reacted due to the high compatibility between the component (B) and the component (A). In addition, the cured products were easily peeled from the Teflon sheets after press curing, indicating that there was also no problem with releasability. In contrast, the surfaces of the fluoropolyether-based cured products obtained from the fluoropolyether-based curable compositions of Comparative Examples 1 and 2 were found to be dotted with uncured oily component. This is presumably because the components (B6) and (B7) reacted insufficiently with the component (A) during heat curing due to their poor compatibility with the component (A), and therefore, unreacted components remained as oily component on the surfaces of the fluoropolyether-based cured products. Furthermore, the cured products were fixed to the Teflon sheets after press curing and suffered damage such as breakage or chipping when peeled from the Teflon sheets, indicating that the releasability was also low.

The fluoropolyether-based cured products obtained as described above were subjected to post-curing at 200°C for 4 hours and were then evaluated for heat resistance, chemical resistance, solvent resistance, and electrolyte solution resistance. Tables 2 to 5 present the results.

### <Heat Resistance>

The physical properties of the fluoropolyether-based cured products obtained from the fluoropolyether-based curable compositions of Examples 1 to 7 and Comparative Examples 1 to 3 were evaluated in accordance with JIS K 6249. The fluoropolyether-based cured products obtained from the fluoropolyether-based curable compositions of Examples 1 to 7 and Comparative Examples 1 to 3 were then allowed to stand in an oven at 150°C for 7 days. The physical properties of the cured products were then evaluated in accordance with JIS K 6249. The change in hardness, the percent change in tensile strength (%), and the percent change in elongation at break (%) were calculated using the following calculation formulae. Table 2 presents the results. Change in hardness = (hardness of cured product after 7 days at 150°C) - (initial hardness of cured product) Percent change in tensile strength (%) = ((tensile strength of cured product after 7 days at 150°C) - (initial tensile strength of cured product))/(initial tensile strength of cured product) × 100 Percent change in elongation at break (%) = ((elongation at break of cured product after 7 days at 150°C) - (initial elongation at break of cured product))/(initial elongation at break of cured product) × 100

**[Table 2]**

| | Change in hardness | Percent change in tensile strength (%) | Percent change in elongation at break (%) |
|---|---|---|---|
| Example 1 | 0 | -4 | -7 |
| Example 2 | -1 | -5 | -9 |
| Example 3 | -2 | -10 | -13 |
| Example 4 | 0 | -4 | -8 |
| Example 5 | -1 | -6 | -9 |
| Example 6 | -1 | -5 | -10 |
| Example 7 | 0 | -4 | -7 |
| Comparative Example 1 | -1 | -9 | -10 |
| Comparative Example 2 | 0 | -9 | -9 |
| Comparative Example 3 | 0 | -4 | -8 |

### <Chemical Resistance>

The fluoropolyether-based cured products obtained from the fluoropolyether-based curable compositions of Examples 1 to 7 and Comparative Examples 1 to 3 were immersed in concentrated hydrochloric acid, concentrated sulfuric acid, concentrated hydrofluoric acid, trifluoroacetic acid, and a 40% by weight aqueous KOH (potassium hydroxide) solution at 20°C for 3 days, and the change in hardness was measured with respect to the hardness before immersion. The change in hardness was calculated using a mathematical formula similar to that used in the heat resistance test. Table 3 presents the results.

**[Table 3]**

| Chemical | Example | | | | | | | Comparative Example | | |
|---|---|---|---|---|---|---|---|---|---|---|
| | 1 | 2 | 3 | 4 | 5 | 6 | 7 | 1 | 2 | 3 |
| Concentrated hydrochloric acid | +2 | +1 | +2 | +2 | +2 | +1 | +2 | +2 | +2 | +6 |
| Concentrated sulfuric acid | -1 | -1 | -2 | -1 | -2 | -1 | -1 | -1 | -1 | -1 |
| Concentrated hydrofluoric acid | -1 | -1 | -2 | -1 | -2 | -1 | -1 | -1 | -1 | -9 |
| Trifluoroacetic acid | -2 | -1 | -3 | -3 | -3 | -1 | -2 | -2 | -2 | Decomposed |
| 40% by weight aqueous KOH solution | +2 | +1 | +2 | +2 | +3 | +1 | +2 | +1 | +1 | ±0 |

As can be seen from the results in Table 3, the cured products obtained from the fluoropolyether-based curable compositions of Examples 1 to 7 and Comparative Examples 1 and 2 were found to have excellent durability to all of the above chemicals. In contrast, the cured product obtained from the fluoropolyether-based curable composition of Comparative Example 3 was found to have poor durability to concentrated hydrofluoric acid and trifluoroacetic acid.

### <Solvent Resistance>

The fluoropolyether-based cured products (cured product samples) obtained from the fluoropolyether-based curable compositions of Examples 1 to 7 and Comparative Examples 1 to 3 were subjected to an immersion test with various organic solvents presented in Table 4 in accordance with JIS K 6258 (immersion time: 70 hours). The percent change in volume (%) after immersion was measured, and the solvent swelling resistance was evaluated. Table 4 presents the results.

**[Table 4]**

| Solvent | Example | | | | | | | Comparative Example | | |
|---|---|---|---|---|---|---|---|---|---|---|
| | 1 | 2 | 3 | 4 | 5 | 6 | 7 | 1 | 2 | 3 |
| Gasoline | +9 | +8 | +10 | +10 | +10 | +9 | +9 | +13 | +11 | +10 |
| Methanol | +2 | +1 | +2 | +3 | +4 | +3 | +2 | +4 | +2 | +2 |
| Chloroform | +15 | +11 | +14 | +13 | +13 | +12 | +14 | +18 | +15 | +14 |
| Acetone | +6 | +5 | +8 | +5 | +9 | +7 | +6 | +9 | +8 | +7 |
| Toluene | +7 | +5 | +6 | +7 | +7 | +6 | +7 | +8 | +8 | +8 |
| IPA*¹⁾ | +2 | +1 | +4 | +3 | +4 | +2 | +2 | +4 | +3 | +2 |
| Acetonitrile | +1 | +1 | +2 | +2 | +2 | +1 | +1 | +3 | +2 | +1 |
| MEK*²⁾ | +14 | +12 | +16 | +14 | +16 | +15 | +14 | +17 | +17 | +15 |
| Ethyl acetate | +13 | +9 | +13 | +13 | +14 | +14 | +12 | +14 | +13 | +13 |
| THF*³⁾ | +18 | +15 | +17 | +17 | +16 | +17 | +17 | +19 | +18 | +19 |
| n-Hexane | +8 | +5 | +9 | +6 | +6 | +7 | +8 | +9 | +9 | +8 |
| Carbon tetrachloride | +12 | +7 | +11 | +12 | +13 | +13 | +12 | +12 | +11 | +11 |

| | | | | | | | | | | |
|---|---|---|---|---|---|---|---|---|---|---|
| *1) IPA: isopropyl alcohol *2) MEK: methyl ethyl ketone *3) THF: tetrahydrofuran | | | | | | | | | | |

As can be seen from the results in Table 4, as with the cured products obtained from the curable fluoropolyether-based curable compositions of Comparative Examples 1 to 3, the cured products obtained from the fluoropolyether-based curable compositions of Examples 1 to 7 were found to have excellent durability to all of the above solvents.

### <Electrolyte Solution Resistance>

The fluoropolyether-based cured products obtained from the fluoropolyether-based curable compositions of Examples 1 to 7 and Comparative Examples 1 to 3 were immersed in an electrolyte solution for lithium-ion batteries (manufactured by Kishida Chemical Co., Ltd.) at 80°C for 3 days. Based on the changes in hardness, stickiness, and appearance of the cured products after immersion, the degree of deterioration of the cured products was evaluated according to the following evaluation criteria.

### [Evaluation Criteria]

### [Hardness]

O: There was little change in hardness after immersion in the electrolyte solution for lithium-ion batteries.
×: There was a noticeable decrease in hardness after immersion in the electrolyte solution for lithium-ion batteries.

### [Stickiness]

Q: There was no change in stickiness of the surface of the cured product after immersion in the electrolyte solution for lithium-ion batteries.
×: The surface of the cured product became sticky after immersion in the electrolyte solution for lithium-ion batteries.

### [Appearance]

Q: There was little change in appearance after immersion in the electrolyte solution for lithium-ion batteries.
×: There was swelling, deformation, or decomposition in the cured product after immersion in the electrolyte solution for lithium-ion batteries.

**[Table 5]**

| | Example | | | | | | | Comparative Example | | |
|---|---|---|---|---|---|---|---|---|---|---|
| | 1 | 2 | 3 | 4 | 5 | 6 | 7 | 1 | 2 | 3 |
| Hardness | ○ | ○ | ○ | ○ | ○ | ○ | ○ | ○ | ○ | × |
| Stickiness | ○ | ○ | ○ | ○ | ○ | ○ | ○ | ○ | ○ | × |
| Change in appearance | ○ | ○ | ○ | ○ | ○ | ○ | ○ | ○ | ○ | × |

The cured products obtained from the fluoropolyether-based curable compositions of Examples 1 to 7 and Comparative Examples 1 and 2 exhibited little change in hardness, surface stickiness, or appearance after immersion in the electrolyte solution for lithium-ion batteries. This showed that the above compositions and cured products are applicable to lithium-ion batteries. In contrast, the cured product obtained from the fluoropolyether-based curable composition of Comparative Example 3 exhibited changes such as swelling and surface decomposition after immersion in the electrolyte solution for lithium-ion batteries. In addition, the cured product was easily torn when pulled at both ends.

The above results showed that the cured products obtained from the fluoropolyether-based curable compositions of Examples 1 to 7 had both durability to hydrofluoric acid and electrolyte solutions for lithium-ion batteries and releasability, thus demonstrating the advantageous effects of the present invention.

## Claims

1. A fluoropolyether-based curable composition comprising:
(A) 100 parts by weight of a perfluoropolyether compound having two or more alkenyl groups in one molecule;
(B) a fluorine-containing organohydrogensilane compound having two or more hydrosilyl groups represented by the following general formula (1), wherein an amount of the fluorine-containing organohydrogensilane compound is an amount such that an amount of hydrogen atoms bonded to silicon atoms in the component (B) is 0.1 to 2.5 mol per 1 mol of alkenyl groups in the component (A): 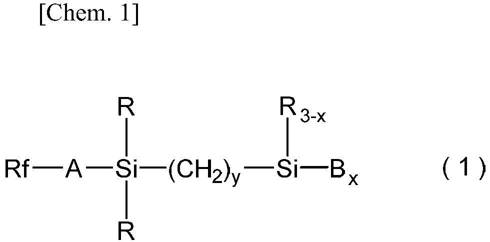 wherein Rf is a monovalent perfluoropolyether group, A is a divalent organic group that has 1 to 20 carbon atoms and that may contain at least one selected from an oxygen atom, a nitrogen atom, and a silicon atom, each R is independently a monovalent hydrocarbon group having 1 to 6 carbon atoms, x is an integer of 1 to 3, each B is independently a monovalent organic group that has one or more diorganohydrosilyl groups and that forms a silalkylene structure with a silicon atom coupled thereto, or when x is 1, B has two or more diorganohydrosilyl groups, and y is 1 or 2; and
(C) a platinum group metal-based catalyst in an amount of 0.1 to 2,000 ppm in terms of the weight of platinum group metal atoms with respect to the component (A).

2. The fluoropolyether-based curable composition according to claim 1, wherein the component (A) is a perfluoropolyether compound represented by the following general formula (2): 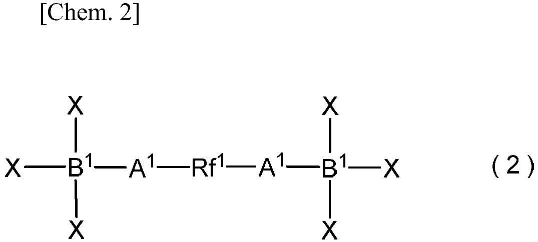 wherein each A¹ is independently a divalent organic group that has 1 to 20 carbon atoms and that may contain at least one selected from an oxygen atom, a nitrogen atom, and a silicon atom, each B¹ is a carbon atom or a silicon atom, each X is independently a hydrogen atom, a methyl group, or an alkenyl group having 2 to 8 carbon atoms, provided that at least two X groups are alkenyl groups having 2 to 8 carbon atoms, and when X is a hydrogen atom, B¹ bonded thereto is a carbon atom, and Rf¹ is a divalent perfluoropolyether group.

3. The fluoropolyether-based curable composition according to claim 1 or 2, wherein Rf in general formula (1) of the component (B) is a group represented by the following general formula (5): 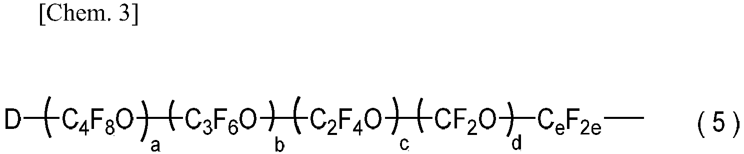 wherein D is a fluorine atom or a perfluorooxyalkyl group having 1 to 6 carbon atoms, a, b, c, and d are each independently an integer of 0 to 100, 2 ≤ a + b + c + d ≤ 100, e is an integer of 1 to 3, repeating units indicated in parentheses may be randomly bonded, and each of these units may be linear or branched.

4. The fluoropolyether-based curable composition according to any one of claims 1 to 3, wherein A in general formula (1) of the component (B) is selected from an alkylene group having 1 to 12 carbon atoms, an alkylene group containing an arylene group having 6 to 8 carbon atoms, a divalent group in which alkylene groups are bonded to each other with a diorganosilylene group provided therebetween, a divalent group in which an alkylene group is bonded to an arylene group with a diorganosilylene group provided therebetween, and a divalent group in which any of these groups further has at least one selected from an oxygen atom of an ether bond, a secondary amino group, a tertiary amino group, and an amide bond.

5. The fluoropolyether-based curable composition according to any one of claims 1 to 4, wherein A in general formula (1) of the component (B) is any of groups represented by the following general formulae (6) to (9): 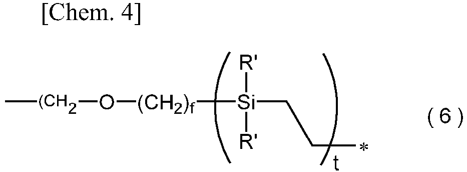 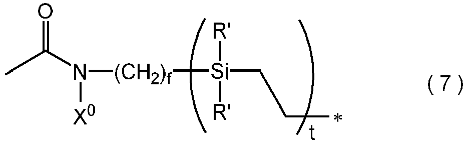 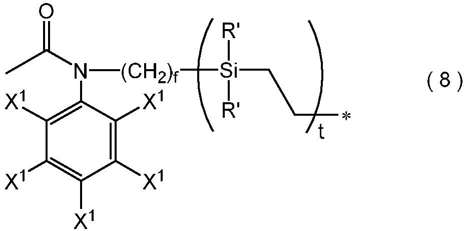 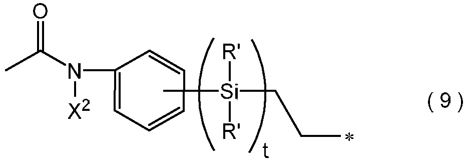 wherein X⁰ is a hydrogen atom, a methyl group, or an ethyl group, each X¹ is independently a hydrogen atom, a fluorine atom, a methyl group, an ethyl group, or a trifluoromethyl group, X² is a hydrogen atom, a methyl group, an ethyl group, an isopropyl group, or a phenyl group, each R' is independently a methyl group or an ethyl group, f is an integer of 1 to 6, t is 0 or 1, bonds marked with * are each attached to a Si atom in general formula (1), and unmarked bonds are each attached to Rf.

6. The fluoropolyether-based curable composition according to any one of claims 1 to 5, wherein each R in general formula (1) of the component (B) is any of a methyl group, an ethyl group, an isopropyl group, a tert-butyl group, and a phenyl group.

7. The fluoropolyether-based curable composition according to any one of claims 1 to 6, wherein a number of consecutive silalkylene structures in a molecular chain between Rf and the diorganohydrosilyl groups in B in general formula (1) of the component (B) is two or more.

8. The fluoropolyether-based curable composition according to any one of claims 1 to 7, wherein B in general formula (1) of the component (B) is a group represented by the following general formula (10): 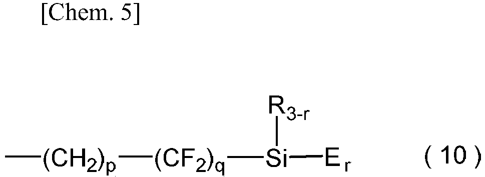 wherein p is an integer of 1 to 6, q is an integer of 0 to 6, r is an integer of 1 to 3, R is as defined above, E is a hydrogen atom or a group represented by the following formula: 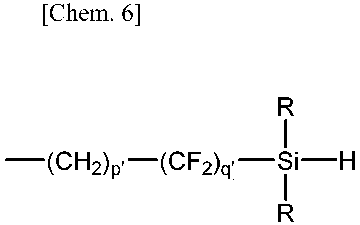 wherein R is as defined above, p' is an integer of 1 to 6, and q' is an integer of 0 to 6, provided that when E is a hydrogen atom, r is 1, and repeating units indicated in parentheses with p and q or with p' and q' may be randomly bonded.

9. The fluoropolyether-based curable composition according to any one of claims 1 to 8, wherein the component (B) is selected from fluorine-containing organohydrogensilane compounds represented by the following formulae: 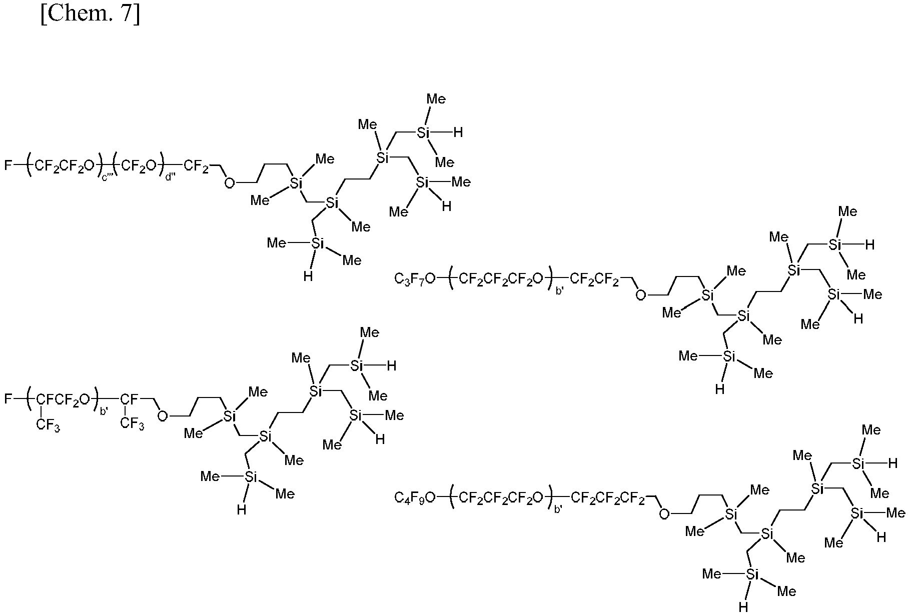 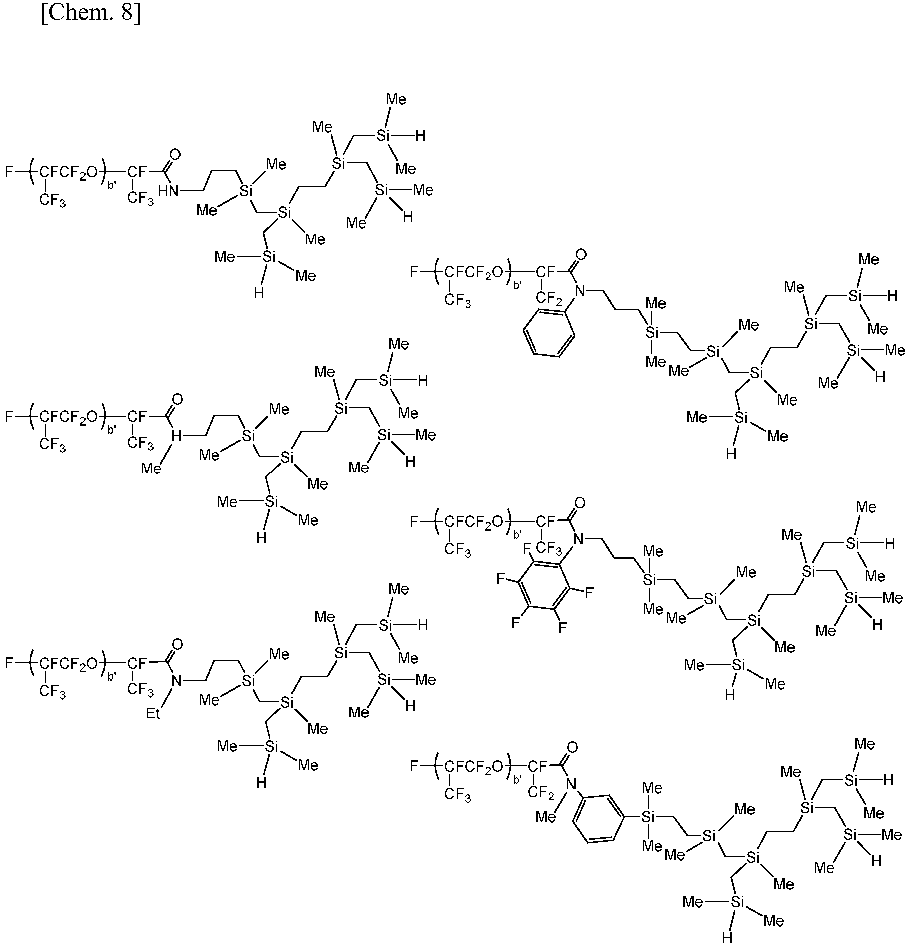 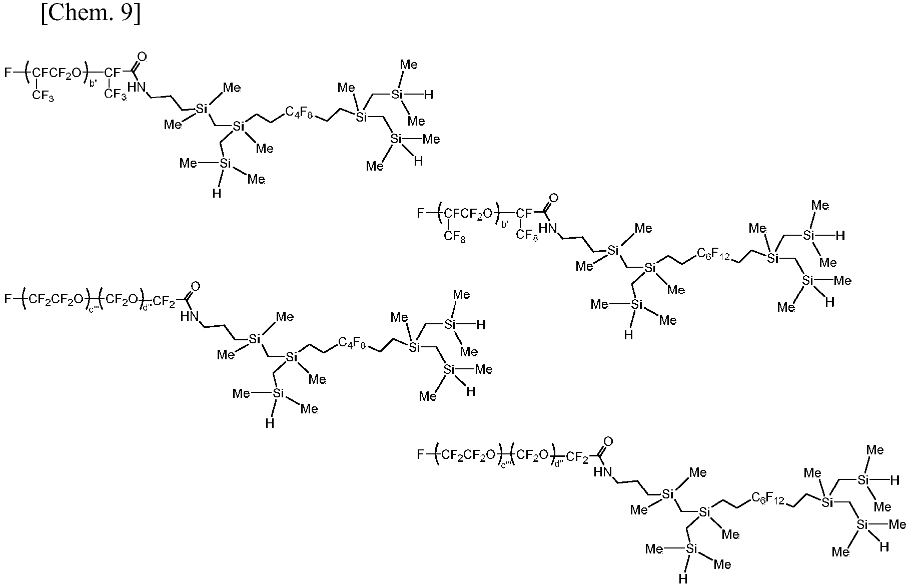 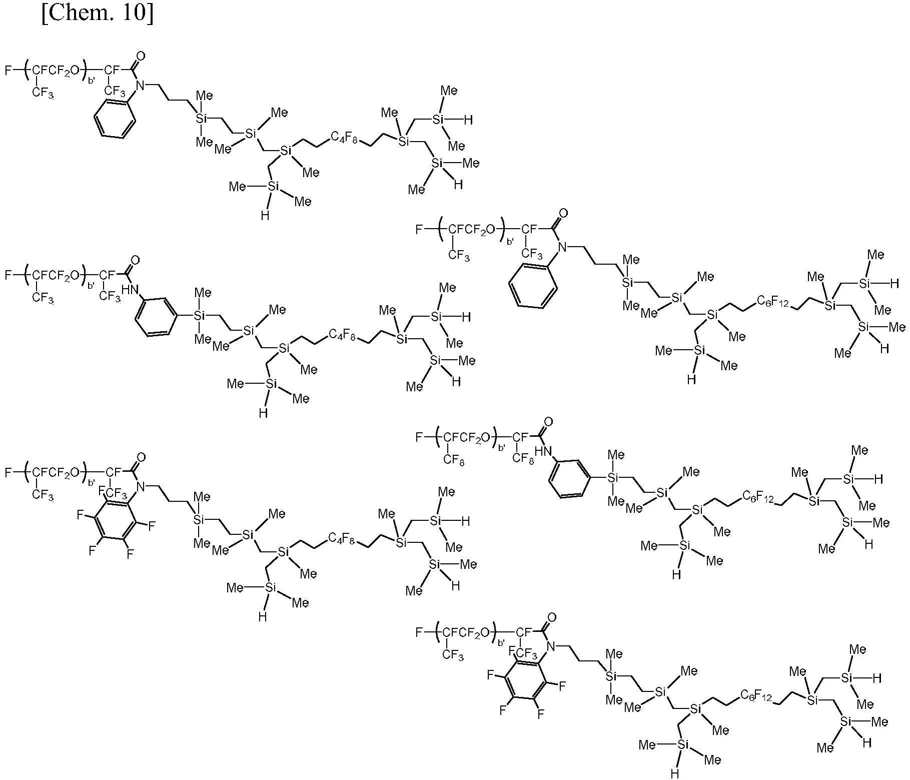 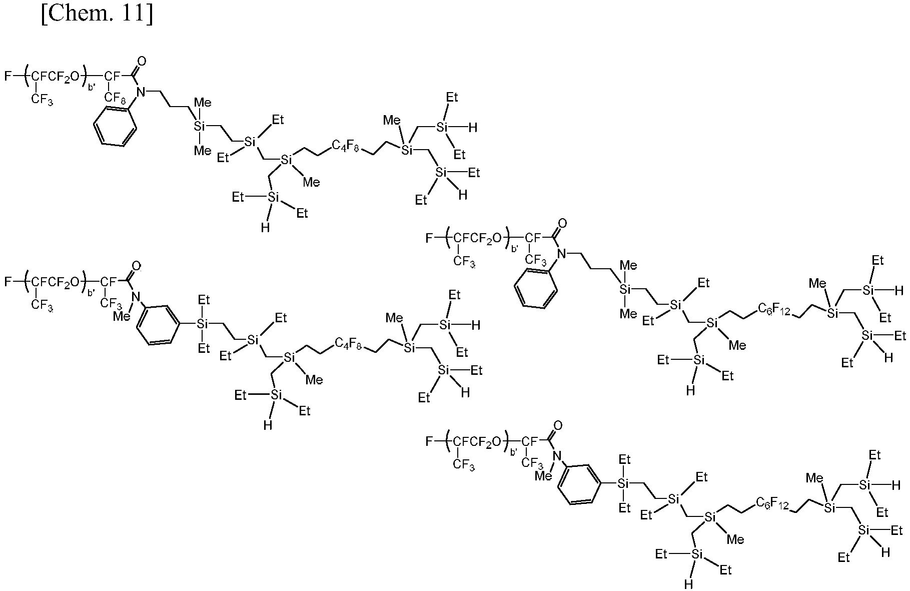 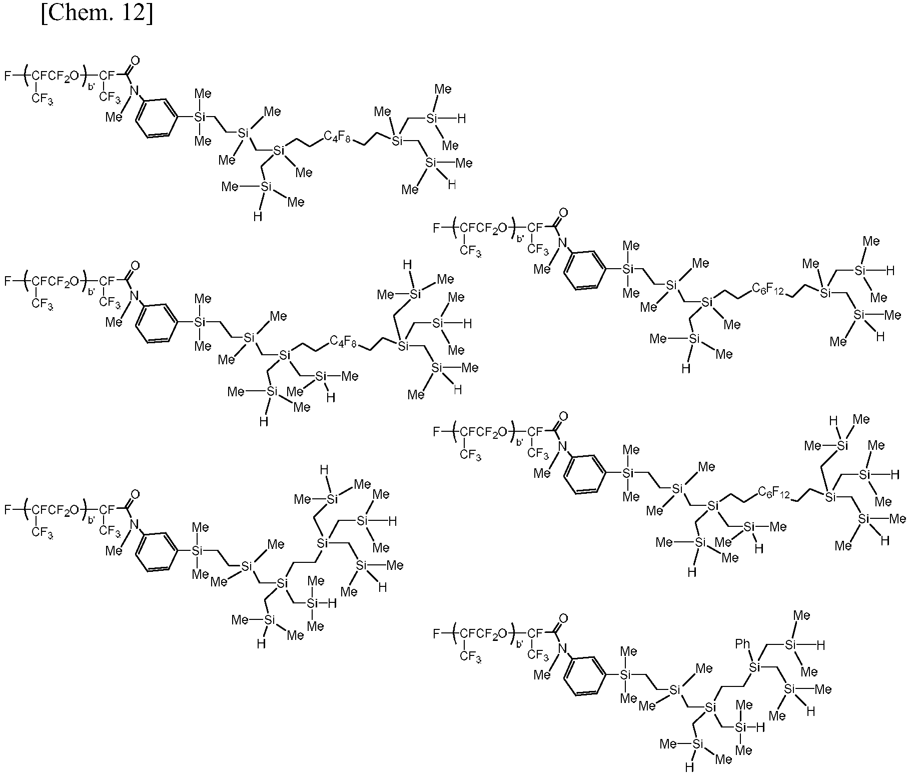 wherein b' is an integer of 2 to 100, c'" and d" are each an integer of 1 to 99, c'" + d" is an integer of 2 to 100, Me is a methyl group, Et is an ethyl group, Ph is a phenyl group, and repeating units indicated in parentheses with c‴ and d" may be randomly bonded.

10. A cured product obtained from the fluoropolyether-based curable composition according to any one of claims 1 to 9.

11. An electric/electronic component comprising the cured product according to claim 10.

12. The electric/electronic component according to claim 11, wherein the cured product is a gasket, packing, a protective seal, or a coating layer.

13. The electric/electronic component according to claim 11 or 12, wherein the electric/electronic component is used for automobiles, chemical plants, semiconductor production lines, analytic or physical/chemical instruments, living environments, communication devices, communication equipment, aircraft, railroad cars, portable devices, power storage devices, robots, or lithium-ion batteries.
